(19) Europäisches Patentamt
European Patent Office
Office européen des brevets

(11) EP 0 476 647 B1

(12) EUROPÄISCHE PATENTSCHRIFT

(45) Veröffentlichungstag und Bekanntmachung des Hinweises auf die Patenterteilung:
**05.03.1997 Patentblatt 1997/10**

(51) Int Cl.[6]: **G03G 9/087**, C09D 5/03, G03G 9/113

(21) Anmeldenummer: **91115933.3**

(22) Anmeldetag: **19.09.1991**

# (54) Polymere Ammoniumverbindungen als Ladungssteuermittel

Polymeric ammonium compounds as charge directors

Composés d'ammonium polymériques comme agents de direction de charge

(84) Benannte Vertragsstaaten:
**CH DE FR GB IT LI**

(30) Priorität: **19.09.1990 DE 4029653**
**07.02.1991 DE 4103610**

(43) Veröffentlichungstag der Anmeldung:
**25.03.1992 Patentblatt 1992/13**

(73) Patentinhaber: **HOECHST AKTIENGESELLSCHAFT**
**65926 Frankfurt am Main (DE)**

(72) Erfinder:
- **Gitzel, Jörg, Dr.**
  **W-6273 Waldems (DE)**
- **Wehle, Detlef, Dr.**
  **W-6272 Niedernhausen (DE)**
- **Macholdt, Hans-Tobias, Dr.**
  **W-6100 Darmstadt (DE)**

(56) Entgegenhaltungen:
**EP-A- 0 087 988**
**EP-A- 0 156 369**
**EP-A- 0 315 084**
**US-A- 4 299 898**

- **PATENT ABSTRACTS OF JAPAN vol. 13, no. 157 (P-857)(3505) 14. April 1989 & JP-A-63 316 064 ( FUJIKURA KASEI K.K. ) 23 Dezember 1988 & WORLD PATENTS INDEX LATEST Section Ch, Week 8906, Derwent Publications Ltd., London, GB; Class A, AN 89-043366 & JP-A-63 316 064**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 476 647 B1

## Beschreibung

Die vorliegende Erfindung betrifft die Verwendung polymerer Ammoniumverbindungen auf der Basis von homo- oder copolymeren Poly(diallylammonium)-Derivaten sowie Copolymerer von Poly(diallylammonium)-Derivaten mit ausgewählten Vinylverbindungen als Ladungssteuermittel in Tonern und Entwicklern für elektrophotographische Aufzeichnungsverfahren sowie in Pulvern und Pulverlacken zur Oberflächenbeschichtung. Die erfindungsgemäßen Verbindungen besitzen durch gezielte Kombination von bestimmten polymeren Ammoniumkationen mit ausgewählten Anionen besonders hohe und konstante Ladungssteuereigenschaften, sehr gute Thermostabilitäten und Dispergierbarkeiten.

Bei elektrophotographischen Aufzeichnungsverfahren wird auf einem Photoleiter ein "latentes Ladungsbild" erzeugt. Dies erfolgt beispielsweise durch Aufladung eines Photoleiters durch eine Coronaentladung und anschließende bildmäßige Belichtung der elektrostatisch aufgeladenen Oberfläche des Photoleiters, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt. In einem darauffolgenden Schritt wird der Toner vom Photoleiter auf beispielsweise Papier, Textilien, Folien oder Kunststoff übertragen und beispielsweise mittels Druck, Strahlung, Hitze oder Lösungsmitteleinwirkung fixiert. Der benutzte Photoleiter wird anschließend gereinigt und steht für einen neuen Aufzeichnungsvorgang zur Verfügung.

In zahlreichen Patentschriften wird die Optimierung von Tonern beschrieben, wobei u.a. der Einfluß des Tonerbindemittels (Variation von Harz/Harzkomponenten oder Wachs/Wachskomponenten), der Einfluß von Carriern (bei Zweikomponentenentwicklern) und Magnetpigmenten (bei Einkomponentenentwicklern) untersucht werden.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. In der Praxis ist dies insofern von zentraler Bedeutung, als daß der Toner im Entwicklergemisch, bevor er auf den Photoleiter übertragen wird, einer erheblichen Aktivierzeit ausgesetzt sein kann, da er teilweise über einen Zeitraum der Herstellung von bis zu mehreren tausend Kopien im Entwicklergemisch verbleibt. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig sogenannte Ladungssteuermittel (auch Ladungskontrollmittel genannt) zugesetzt. Dabei ist neben dem Vorzeichen der Ladungssteuerung das Ausmaß des Steuereffektes von Bedeutung, da eine höhere Wirksamkeit eine geringe Einsatzmenge erlaubt. Da Tonerbindemittel in der Regel eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.

Ladungssteuermittel, die nicht verhindern können, daß der Toner bzw. Entwickler bei längerer Gebrauchsdauer eine hohe

Ladungsdrift zeigt (Alterung), die sogar bewirken kann, daß der Toner bzw. Entwickler eine Ladungsumkehr erfährt, sind daher für die Praxis ungeeignet.

Vollfarbkopierer und -laserdrucker arbeiten nach dem Prinzip der Trichromie, welches eine exakte Farbtonabstimmung der drei Grundfarben (Gelb, Cyan und Magenta) erforderlich macht. Geringste Farbtonverschiebungen auch nur einer der drei Grundfarben verlangt zwingend eine Farbtonverschiebung der beiden anderen Farben, um auch dann originalgetreue Vollfarbkopien bzw. -drucke produzieren zu können. Wegen dieser in Farbtonern erforderlichen präzisen Abstimmung der Coloristik der einzelnen Farbmittel aufeinander, sind Ladungssteuermittel absolut ohne Eigenfarbe ganz besonders wichtig.

Bei Farbtonern müssen die drei Toner Gelb, Cyan und Magenta neben den genau definierten farblichen Anforderungen auch hinsichtlich ihrer triboelektrischen Eigenschaften exakt aufeinander abgestimmt sein. Diese triboelektrische Abstimmung ist erforderlich, weil beim Vollfarbdruck bzw. bei der Vollfarbkopie aufeinanderfolgend die drei Farbtoner (bzw. vier Farbtoner, wenn Schwarz mit einbezogen wird) im selben Gerät übertragen werden müssen.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-27; US-PS 4057426). Wegen der unterschiedlichen triboelektrischen Effekte von Farbmitteln und des daraus resultierenden teilweise sehr ausgeprägten Einflusses auf die Toneraufladbarkeit ist es nicht möglich, sie in eine einmal erstellte Tonerbasisrezeptur als Farbmittel einfach hinzuzufügen. Vielmehr kann es notwendig werden, für jedes Farbmittel eine eigene Rezeptur zu erstellen, für welche z. B. Art und Menge des benötigten Ladungssteuermittels speziell zugeschnitten werden. Dieses Vorgehen ist entsprechend aufwendig und kommt bei Farbtonern für Prozeßfarbe (Trichromie) noch zusätzlich zu den bereits beschriebenen

Schwierigkeiten hinzu.
Daher sind hochwirksame farblose Ladungssteuermittel erforderlich, die imstande sind, das unterschiedliche triboelektrische Verhalten verschiedener Farbmittel zu kompensieren und dem Toner die gewünschte Aufladung zu verleihen. Auf diese Art und Weise können triboelektrisch sehr unterschiedliche Farbmittel anhand einer einmal erstellten Tonerbasisrezeptur mit ein und demselben Ladungssteuermittel in den verschiedenen erforderlichen Tonern (Gelb, Cyan, Magenta und gegebenenfalls Schwarz) eingesetzt werden. Darüberhinaus ist für die Praxis wichtig, daß die Ladungssteuermittel eine hohe Thermostabilität und eine gute Dispergierbarkeit besitzen. Typische Einarbeitungstemperaturen für Ladungssteuermittel in die Tonerharze liegen bei Verwendung von z.B. Knetern oder Extrudern zwischen 100 °C und 200 °C. Dementsprechend ist eine Thermostabilität von 200 °C, besser noch 250 °C, von großem Vorteil. Wichtig ist auch, daß die Thermostabilität über einen längeren Zeitraum (ca. 30 min.) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie z.B. Styrol-, Stryrolacrylat-, Styrolbutadien-, Acrylat-, Polyester-, Phenol- und Epoxidharze, einzeln oder in Kombination, die noch weitere Inhaltsstoffe, wie Farbmittel, Wachse oder Fließhilfsmittel, enthalten können oder im Nachhinein zugesetzt bekommen können.
Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150 °C, besser > 200 °C, aufweist. Eine Klebrigkeit führt häufig zu Problemen beim Zudosieren in die Tonerformulierung, und niedrige Schmelz- bzw. Erweichungspunkte können dazu führen, daß beim Eindispergieren keine homogene Verteilung erreicht wird, da sich das Material z.B. tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch bzw. elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt u.a. beim Lackieren von Kleingegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack bzw. das Pulver erhält seine elektrostatische Aufladung im allgemeinen nach einem der beiden folgenden Verfahren:

a) Beim Corona-Verfahren wird der Pulverlack bzw. das Pulver an einer geladenen Corona vorbeigeführt und hierbei aufgeladen,
b) beim triboelektrischen bzw. elektrokinetischen Verfahren wird vom Prinzip der Reibungselektrizität Gebrauch gemacht. Der Pulverlack bzw. das Pulver erhält im Sprühgerät eine elektrostatische Aufladung, die der Ladung des Reibungspartners, im allgemeinen ein Schlauch oder Sprührohr (beispielsweise aus Polytetrafluorethylen), entgegengesetzt ist.

Auch eine Kombination von beiden Verfahren ist möglich.

Als Pulverlackharze werden typischerweise Epoxidharze, carboxyl- und hydroxylgruppenhaltige Polyesterharze, Polyurethan- und Acrylharze zusammen mit den entsprechenden Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.
Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze, Melaminharze, für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.
Der Mangel an ungenügender Aufladung ist vor allem bei triboelektrisch bzw. elektrokinetisch versprühten Pulvern und Pulverlacken, die auf Basis von Polyesterharzen, insbesondere carboxylgruppenhaltigen Polyestern, oder auf Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. (Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.)

Farblose Ladungssteuermittel werden in zahlreichen Patentschriften beansprucht. So beschreiben beispielsweise

DE-OS 3144017, JP-OS 61-236557 und US-PS 4656112 Metallkomplexe und Metallorganyle, DE-OS 3837345, DE-OS 3738948, DE-OS 3604827, EP-OS 242420, EP-OS 203532, US-PS 4684596, US-PS 4683188 und US-PS 4493883 Ammonium- und Immoniumverbindungen und DE-OS 3912396, US-PS 4496643 und US-PS 3893935 Phosphoniumverbindungen sowie EP-PS 185509, JP-OS 01-136166, JP-OS 63-060458, JP-OS 62-264066, US-PS 4840863, US-PS 4639043, US-PS 4378419, US-PS 4355167 und US-PS 4299898 polymere Ammoniumverbindungen als farblose Ladungssteuermittel.

Allerdings weisen die bisher bekannten farblosen Ladungssteuermittel eine Reihe von Nachteilen auf, die den Einsatz in der Praxis stark einschränken bzw. zum Teil unmöglich machen. So weisen die in DE-OS 3144017 und US-PS 4656112 beschriebenen Chrom-, Eisen-, Kobalt- und Zinkkomplexe und die in JP-OS 61-236557 beschriebenen Antimonorganyle neben der Schwermetallproblematik auch den Nachteil auf, daß sie teilweise nicht wirklich farblos sind, und somit in Farbtonern bzw. in weißen oder bunten Pulverlacken nur eingeschränkt Anwendung finden können.

Die bekannten, an sich geeigneten, quaternären Ammoniumverbindungen sind häufig schwierig zu dispergieren, was zu einer ungleichmäßigen Aufladung des Toners führt. Zudem tritt oft das Problem auf, daß die von diesen Verbindungen erzeugte Tonerladung nicht über einen längeren Aktivierzeitraum (bis zu 24 Stunden Aktivierdauer) hinweg stabil ist, insbesondere bei hoher Temperatur und Luftfeuchtigkeit (EP-OS 242420), was dann im Verlaufe eines Kopier- oder Druckprozesses zur Anreicherung falsch bzw. nicht genügend aufgeladener Tonerteilchen führt und damit den Prozeß zum Erliegen bringt. Ferner ist bekannt, daß Ladungssteuermittel auf Ammonium- und Immoniumbasis empfindlich gegen Licht oder mechanische Einwirkungen (EP-OS 203532, US-PS 4683188) und thermisch labil sein können, und daß sie Zersetzungsprodukte bilden, die sich nachteilig auf die triboelektrische Aufladung des Toners auswirken können (US-PS 4684596) und/oder eine starke, oft dunkelbraune, Eigenfarbe aufweisen (DE-OS 3738948, DE-OS 3604827, US-PS 4493883). Darüberhinaus zeigen sie oft wachsartiges Verhalten, zum Teil Wasserlöslichkeit und/oder geringe Wirksamkeit als Ladungssteuermittel.

An sich geeignete Ladungssteuermittel auf Basis hochgradig fluorierter Ammonium-, Immonium- und Phosphoniumverbindungen (DE-OS 3912396, DE-OS 3837345) haben den Nachteil einer aufwendigen Synthese, wodurch hohe Herstellungskosten für die entsprechenden Substanzen anfallen, und sind nicht ausreichend thermostabil.

Phosphoniumsalze sind als Ladungssteuermittel weniger wirksam als Ammoniumsalze (US-PS 4496643, US-PS 3893939) und können toxikologisch problematisch sein.

Ladungssteuermittel auf Basis polymerer Ammoniumverbindungen führen zum Teil zu Amingeruch des Toners oder Entwicklers, und die Ladungskontrolleigenschaften dieser Substanzen können sich durch relativ leichte Oxidation und Feuchtigkeitsaufnahme ändern. Des weiteren sind die Oxidatonsprodukte gefärbt und daher störend vor allem in Farbtonern (US-PS 4840863).

Die oben genannten Ladungssteuermittel für elektrophotograpische Toner und Entwickler sind z.B. aufgrund ihrer Farbigkeit für den Einsatz in den überwiegend weißen oder klaren triboelektrisch bzw. elektrokinetisch versprühten Pulvern und Pulverlacken nicht geeignet. Des weiteren schränkt mangelnde Thermostabilität den Einsatz derartiger Ladungssteuermittel stark ein, da Pulverlacke beispielsweise bei über 200 °C 15 Minuten lang eingebrannt werden.

Die in DE-OS 3837345 und DE-OS 3600395 beanspruchten Ladungssteuermittel für Pulver und Pulverlacke sind aufgrund von Wachsartigkeit und Wasserlöslichkeit bzw. Hygroskopie schlecht zu handhaben und nur eingeschränkt anwendbar.

Die in EP-OS 0371528 beanspruchten Amine als Ladungssteuermittel für Pulver und Pulverlacke sind aufgrund der Geruchsbelästigung für den Praxiseinsatz problematisch.

Ziel der vorliegenden Erfindung ist es daher, verbesserte besonders wirksame farblose Ladungssteuermittel zu finden, wobei neben der Ladungshöhe das schnelle Erreichen und die Konstanz dieser Ladung gewährleistet sein muß, und der Ladungssteuereffekt nicht empfindlich gegenüber Temperatur- und Luftfeuchtigkeits-Veränderungen sein darf. Darüberhinaus sollen diese Verbindungen in hohem Maße thermostabil sein, vor allem auch über einen längeren Zeitraum hinweg im jeweiligen Trägermaterial (Harz), sowie möglichst wasserunlöslich, gut dispergierbar und verträglich mit den Toner- bzw. Pulverlackinhaltsstoffen. Des weiteren soll die Synthese der Verbindungen wenig aufwendig und ihre Herstellung kostengünstig sein.

Überraschenderweise hat sich nun gezeigt, daß spezielle polymere Ammoniumverbindungen auf der Basis von homo- oder copolymeren Poly(dialkyldiallylammonium)-Derivaten sowie deren Copolymerer von Poly(diallylammonium)-Derivaten mit ausgewählten Vinylverbindungen besonders wirksame Ladungssteuermittel für elektrophotographische Toner und Entwickler sind, und darüberhinaus auch als ladungsverbessernde Mittel in Pulvern und Lacken zur Oberflächenbeschichtung, insbesondere triboelektrisch bzw. elektrokinetisch versprühten Pulverlacken, eingesetzt werden können.

Aufgrund ihrer Farblosigkeit, hohen Wirksamkeit, guten Verträglichkeit und Dispergierbarkeit in gängigen Toner- und Pulverlackharzen, ihrer chemischen Inertheit sowie wegen der Unempfindlichkeit des Ladungssteuereffektes gegenüber Temperatur- und Luftfeuchtigkeitsschwankungen sind die Verbindungen insbesondere für den Einsatz in Farbtonern bzw. -entwicklern für Vollfarbkopierer und -laserdrucker nach dem Prinzip der Trichromie (subtraktive Farbmischung), aber auch für farbige Toner bzw. Entwickler im allgemeinen und für schwarze Toner oder Entwickler sowie

für Pulver und Pulverlacke geeignet. Des weiteren eigenen sich die Verbindungen für die Beschichtung von Carriern oder als Bestandteile von Beschichtungen von Carriern.
Ein großer technischer Vorteil dieser gut dispergierbaren Verbindungen liegt darin, daß Substanzen derselben Verbindungsklasse je nach Kationen-Anionen-Kombination entweder als positives oder negatives Ladungssteuermittel eingesetzt werden können. Somit werden Probleme bei der Einarbeitung in das Tonerbindemittel und der Verträglichkeit mit dem Tonerbindemittel nach Erstellung einer Tonerbasisrezeptur minimiert. Es können somit sowohl Positiv- als auch Negativtoner anhand einer festen Tonerbasisrezeptur (bestehend aus Tonerbindemittel, Farbmittel, Fließhilfsmittel und ggfs. weiteren Komponenten) durch Einarbeitung des gewünschten Steuermittels hergestellt werden.
Bei den erfindungsgemäß beanspruchten Verbindungen sind von ganz besonderem Vorteil die wenig aufwendige Synthese, die kostengünstige Herstellung, die hohe Wirksamkeit und die ausgezeichnete Thermostabilität.

Gegenstand der vorliegenden Erfindung ist somit die Verwendung von polymeren Ammoniumverbindungen mit einem Molekulargewicht von etwa 5000 bis etwa 500000 auf der Basis von Poly(diallylammonium)-Derivaten oder deren Copolymeren, mit den molaren Monomerenverhältnissen (I):(II) und (I):(III) und (II):(III) von etwa 0,5:0,5 bis etwa 0,95:0,05 im Copolymeren, hergestellt durch Homopolymerisation von Monomeren der allgemeinen Formeln (I) oder (II) sowie durch Copolymerisation von Gemischen zweier Monomerer der allgemeinen Formeln (I) bis (III) und gegebenenfalls anschließendem Anionenaustausch

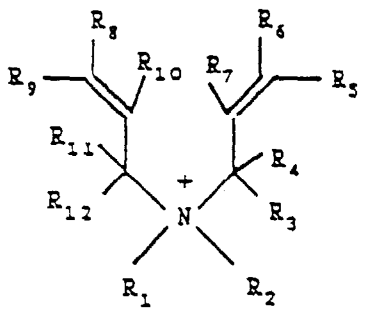

$X^-$ (I),

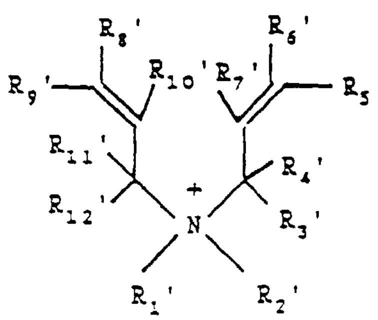

$Y^-$ (II),

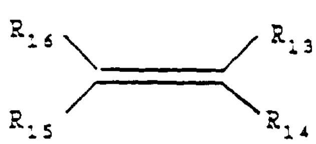

(III),

wobei die Reste $R_1$ bis $R_{12}$ und $R_1$' bis $R_{12}$' unabhängig voneinander jeweils ein Wasserstoffatom, Halogenatom, einen Hydroxyl-Rest, einen primären, sekundären oder tertiären Amino-Rest, eine Carbonsäure- oder Carbonsäureester-Rest, einen Sulfonsäure- oder Sulfonsäureester-Rest, -Rest, einen Cyano- oder Nitro-Rest oder jeweils einen Rest auf Basis eines Kohlenwasserstoffes, der durch Heteroatome unterbrochen sein kann, bedeuten, und die Reste $R_{13}$ bis $R_{16}$ unabhängig voneinander jeweils ein Wasserstoffatom, Chloratom, Bromatom, einen Hydroxyl-Rest, einen primären, sekundären oder tertiären Amino-Rest, einen Carbonsäure- Rest, einen Sulfonsäure- oder Sulfonsäureester-Rest, -Rest, einen Cyano- oder Nitro-Rest oder jeweils einen Rest auf Basis eines Kohlenwasserstoffes, der durch Heteroatome unterbrochen sein kann, bedeuten,
wobei $R_1$ und $R_2$ bzw. $R_1$' und $R_2$' unabhängig voneinander Wasserstoffatome, geradkettige oder verzweigte, gesättigte oder ungesättigte Alkyl($C_1$-$C_{18}$)- oder Alkoxy($C_1$-$C_{18}$)-Reste, Polyoxalkylen-Reste, bevorzugt Polyoxethylen- und Polyoxpropylen-Reste, der allgemeinen Formel -(Alkylen($C_1$-$C_5$)-O)$_n$-R, worin R ein Wasserstoffatom, ein Alkyl($C_1$-$C_4$)-Rest oder ein Acyl-Rest, wie beispielsweise der Acetyl-, Benzoyl- oder Naphthoyl-Rest, und n eine Zahl von 1 bis 10 ist, Aryl- oder Heteroarylreste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexylreste, bedeuten und sich $R_1$ und $R_2$ bzw. $R_1$' und $R_2$' auch zu einem gesättigten oder ungesättigten, aromatischen oder nichtaromatischen 5 bis 7-gliedrigen Ringsystem zusammenschließen können, wie beispielsweise das Pyridinium-Ringsystem, das weitere Heteroatome, bevorzugt Stickstoff- und/oder Sauerstoff- und/oder Schwefelatome, enthalten kann, wie beispielsweise das Morpholinium-Ringsystem, sowie substituiert und/oder durch Ankondensation von oder Verbrückung zu weiteren Ringsystemen modifiziert sein kann, wie beispielsweise das Chinolinium-Ringsystem, wobei die Reste $R_1$ und $R_2$ bzw. $R_1$' und $R_2$' ein oder mehrere Heteroatome, wie beispielsweise Stickstoff- und/oder Sauerstoff- und/oder Schwefel- und/oder Phosphoratome, enthalten und durch Halogenatome, Hydroxyl-, Carboxyl-, Sulfonsäure-, Cyano- oder Mercapto-Reste, Carboxamid-Reste wie beispielsweise -NH-C(O)-Alkyl($C_1$-$C_4$), Sulfonamid-Reste, wie beispielsweise -NH-$SO_2$-Alkyl($C_1$-$C_4$), Urethan-Reste, wie beipielsweise -NH-C(O)O-Alkyl($C_1$-$C_4$), Keto-Reste, wie beipielsweise -C(O)-Alkyl ($C_1$-$C_4$), primäre, sekundäre oder teriäre Amino-Reste, wie beispielsweise -NH[Alkyl($C_1$-$C_4$)], -N[Alkyl($C_1$-$C_4$)]$_2$, Nitro-Reste, Ether-Reste, wie beipielsweise -Alkylen($C_1$-$C_4$)-O-Alkyl($C_1$-$C_4$), Alkyl($C_1$-$C_{30}$)-, Alkoxy($C_1$-$C_{30}$)-Reste, Aroxy-Reste, wie beispielsweise Phenoxy-Reste, Halogenalkyl($C_1$-$C_{30}$)-, Halogenalkoxy($C_1$-$C_{30}$)-Reste oder Ester-Reste, wie beipielsweise -C(O)O-Alkyl($C_1$-$C_4$), substituiert sein können, und die Reste $R_3$ bis $R_{12}$ bzw. $R_3$' bis $R_{12}$' unabhängig voneinander Wasserstoffatome, Halogenatome, geradkettige oder verzweigte, gesättigte oder ungesättigte Alkyl($C_1$-$C_{18}$)- oder Alkoxy($C_1$-$C_{18}$)-Reste, Polyoxalkylen-Reste, bevorzugt Polyoxethylen- und Polyoxpropylen-Reste, der allgemeinen Formel -(Alkylen($C_1$-$C_5$)-O)$_n$-R, worin R ein Wasserstoffatom, ein Alkyl($C_1$-$C_4$)-Rest oder ein Acyl-Rest, wie beispielsweise der Acetyl-, Benzoyl- oder Naphthoyl-Rest, und n eine Zahl von 1 bis 10 ist, Aryl- oder Heteroarylreste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Aroxy-Reste, wie beispielsweise Phenoxy-Reste, Alkaryl-Reste, wie beispielsweise Benzyl-Reste, oder Cycloalkyl-Reste, wie beispielsweise Cyclopentyl- oder Cyclohexylreste, bedeuten und sich zwei der Reste $R_3$ bis $R_{12}$ bzw. $R_3$' bis $R_{12}$' auch zu einem gesättigten oder ungesättigten, aromatischen oder nichtaromatischen 5 bis 7-gliedrigen Ringsystem zusammenschließen können, wie beispielsweise das Pyridinium-Ringsystem, das weitere Heteroatome, bevorzugt Stickstoff- und/oder Sauerstoff- und/oder Schwefelatome, enthalten kann, wie beispielsweise das Morpholinium-Ringsystem, sowie substituiert und/oder durch Ankondensation von oder Verbrückung zu weiteren Ringsystemen modifiziert sein kann, wie beispielsweise das Chinolinium-Ringsystem, wobei die Reste $R_3$ bis $R_{12}$ bzw. $R_3$' bis $R_{12}$' ein oder mehrere Heteroatome, wie beispielsweise Stickstoff- und/oder Sauerstoff- und/oder Schwefel- und/oder Phosphoratome, enthalten und durch Halogenatome, Hydroxyl-, Carboxyl-, Sulfonsäure-, Cyano- oder Mercapto-Reste, Carboxamid-Reste wie beispielsweise -NH-C(O)-Alkyl($C_1$-$C_4$), Sulfonamid-Reste, wie beispielsweise -NH-$SO_2$-Alkyl($C_1$-$C_4$), Urethan-Reste, wie beipielsweise -NH-C(O)O-Alkyl($C_1$-$C_4$), Keto-Reste, wie beipielsweise -C(O)-Alkyl($C_1$-$C_4$), primäre, sekundäre oder teriäre Amino-Reste, wie beispielsweise -NH [Alkyl($C_1$-$C_4$)], -N[Alkyl($C_1$-$C_4$)]$_2$, Nitro-Reste, Ether-Reste, wie beipielsweise -Alkylen($C_1$-$C_4$)-O-Alkyl($C_1$-$C_4$), Alkyl ($C_1$-$C_{30}$)-, Alkoxy($C_1$-$C_{30}$)-Reste, Aroxy-Reste, wie beispielsweise Phenoxy-Reste, Halogenalkyl($C_1$-$C_{30}$)-, Halogenalkoxy($C_1$-$C_{30}$)-Reste oder Ester-Reste, wie beipielsweise -C(O)O-Alkyl($C_1$-$C_4$), substituiert sein kennen, und die Reste $R_{13}$ bis $R_{16}$ unabhängig voneinander Wasserstoffatome, Chloratome, Bromatome, geradkettige oder verzweigte, gesättigte oder ungesättigte Alkyl($C_1$-$C_{30}$)-Reste, Polyoxalkylen-Reste, bevorzugt Polyoxethylen- und Polyoxpropylen-Reste, der allgemeinen Formel -(Alkylen($C_1$-$C_5$)-O)$_n$-R, worin R ein Wasserstoffatom, einen Alkyl($C_1$-$C_4$)-Rest oder einen Acyl-Rest, wie beispielsweise der Acetyl-, Benzoyl- oder Naphthoyl-Rest, und n eine Zahl von 1 bis 10 ist, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexyl-Reste, Carboxyl-, Sulfonsäure- oder Cyano-Reste, Carboxanid-Reste, wie beispielsweise -NH-C(O)-Alkyl($C_1$-$C_4$), Sulfonamid-Reste, wie beispielsweise -NH-$SO_2$-Alkyl($C_1$-$C_4$), Carboxylat-Reste, wie beipielsweise -O-C(O)-Alkyl($C_1$-$C_4$), Keto-Reste, wie beipielsweise -C(O)-Alkyl($C_1$-$C_4$), Lactam-Reste, wie beispielsweise

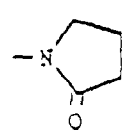

,

oder Ether-Reste, wie beipielsweise -Alkylen($C_1$-$C_4$)-O-Alkyl($C_1$-$C_4$), bedeuten, wobei die Reste $R_{13}$ bis $R_{16}$ ein oder mehrere Heteroatome, wie beispielsweise Stickstoff- und/oder Sauerstoff- und/oder Schwefel- und/oder Phosphoratome, enthalten und durch Chlor- oder Bromatome, Hydroxyl-, Carboxyl-, Sulfonsäure-, Cyano- oder Mercapto-Reste,

Carboxamid-Reste wie beispielsweise -NH-C(O)-Alkyl($C_1$-$C_4$), Sulfonamid-Reste, wie beispielsweise -NH-$SO_2$-Alkyl ($C_1$-$C_4$), primäre, sekundäre oder teriäre Amino-Reste, wie beispielsweise -NH[Alkyl($C_1$-$C_4$)], -N[Alkyl($C_1$-$C_4$)]$_2$ oder Nitro-Reste substituiert sein kennen, und $X^-$ bzw. $Y^-$ jeweils das stöchiometrische Äquivalent eines organischen oder anorganischen Anions oder eines Gemisches von organischen und/oder anorganischen Anionen bedeuten, und wobei im Falle der Homopolymerisation von Monomeren der allgemeinen Formeln (I) oder (II) $R_1$und $R_2$ und/oder $R_1$' und $R_2$' identisch oder verschieden sein kennen, und wobei im Falle der Copolymerisation von Gemischen zweier Monomerer der Formeln (I) bis (III) sowohl die Reste $R_1$ und $R_2$ und/oder $R_1$' und $R_2$' als auch die Anionen $X^-$ und $Y^-$ identisch oder verschieden sein können,

einzeln oder in Kombination als Ladungssteuermittel in elektrophotographischen Tonern und Entwicklern, die zum Kopieren bzw. Vervielfältigen von Vorlagen sowie zum Drucken von elektronisch, magnetisch oder optisch gespeicherten Informationen oder im Colorproofing eingesetzt werden. Darüberhinaus sind die erfindungsgemäß beanspruchten Verbindungen, wobei $R_{13}$ bis $R_{16}$ auch die Bedeutung eines Carbonsäureester-Restes haben können, geeignet als Ladungssteuermittel in Pulvern und Lacken zur Oberflächenbeschichtung von Gegenständen aus Metall, Holz, Kunststoff, Glas, Keramik, Beton, Textilmaterial, Papier oder Kautschuk, insbesondere in triboelektrisch bzw. elektrokinetisch versprühten Pulverlacken.

Außerdem können diese Verbindungen auch als ladungsverbesserndes Mittel in Form von Beschichtungen von Carriern bzw. Bestandteil von Beschichtungen von Carriern, die in Entwicklern von elektrophotographischen Kopierern oder Druckern zur Anwendung kommen, eingesetzt werden.

Die erfindungsgemäß beanspruchten Verbindungen liegen in einer Menge von etwa 0,01 bis etwa 30 Gewichtsprozent, vorzugsweise von etwa 0,1 bis etwa 5 Gewichtsprozent, homogen verteilt in dem jeweiligen Toner, Entwickler, Lack oder Pulver vor.

Besonders geeignet sind polymere Ammoniumverbindungen mit einem Molekulargewicht von etwa 20000 bis etwa 250000 auf der Basis von Poly(diallylammonium)-Derivaten sowie deren Copolymeren, mit den molaren Monomerenverhältnissen (I):(II) und (I):(III) und (II):(III) von etwa 0,5:0,5 bis etwa 0,95:0,05 im Copolymeren, hergestellt durch Homopolymerisation von Monomeren der oben genannten Formeln (I) oder (II) sowie durch Copolymerisation von Gemischen zweier Monomerer der oben genannten Formeln (I) bis (III) und gegebenenfalls anschließendem Anionenaustausch,

in denen $R_1$ und $R_2$ bzw. $R_1$' und $R_2$' unabhängig voneinander Wasserstoffatome, geradkettige oder verzweigte, gesättigte oder ungesättigte Alkyl($C_1$-$C_8$)- oder Alkoxy($C_1$-$C_8$)-Reste, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, oder Cycloalkyl-Reste, wie beispielsweise Cyclopentyl- oder Cyclohexylreste, bedeuten, wobei die Reste $R_1$ und $R_2$ bzw. $R_1$' und $R_2$' durch Halogenatome, Hydroxyl-, Carboxyl-, Sulfonsäure-Reste, Carboxamid-Reste, wie beispielsweise -NH-C(O)-Alkyl($C_1$-$C_4$), Sulfonamid-Reste, wie beispielsweise -NH-$SO_2$-Alkyl($C_1$-$C_4$), Keto-Reste, wie beipielsweise -C(O)-Alkyl($C_1$-$C_4$), primäre, sekundäre oder teriäre Amino-Reste, wie beispielsweise -NH[Alkyl($C_1$-$C_4$)], -N[Alkyl($C_1$-$C_4$)]$_2$, Nitro-Reste, Ether-Reste, wie beipielsweise -Alkylen($C_1$-$C_4$)-O-Alkyl($C_1$-$C_4$), Alkyl($C_1$-$C_4$)-, Alkoxy($C_1$-$C_4$)-, Aroxy-Reste, wie beispielsweise Phenoxy-Reste, Halogenalkyl($C_1$-$C_4$)-, Halogenalkoxy($C_1$-$C_4$)-Reste oder Ester-Reste, wie beipielsweise -C(O)O-Alkyl($C_1$-$C_4$), substituiert sein können,

und die Reste $R_3$ bis $R_{12}$ bzw. $R_3$' bis $R_{12}$' unabhängig voneinander Wasserstoffatome, Halogenatome, geradkettige oder verzweigte, gesättigte oder ungesättigte Alkyl($C_1$-$C_8$)- oder Alkoxy($C_1$-$C_8$)-Reste, Aryl- oder Heteroaryl-Reste, wie beispielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Aroxy-Reste, wie beispielsweise Phenoxy-Reste, Alkaryl-Reste, wie beispielsweise Benzyl-Reste, oder Cycloalkyl-Reste, wie beispielsweise Cyclopentyl- oder Cyclohexylreste, bedeuten, wobei die Reste $R_3$ und $R_{12}$ bzw. $R_3$' und $R_{12}$' durch Halogenatome, Hydroxyl-, Carboxyl-, Sulfonsäure-Reste, Carboxamid-Reste, wie beispielsweise -NH-C(O)-Alkyl($C_1$-$C_4$), Sulfonamid-Reste, wie beispielsweise -NH-$SO_2$-Alkyl($C_1$-$C_4$), Keto-Reste, wie beipielsweise -C(O)-Alkyl($C_1$-$C_4$), primäre, sekundäre oder teriäre Amino-Reste, wie beispielsweise -NH[Alkyl($C_1$-$C_4$)], -N[Alkyl($C_1$-$C_4$)]$_2$, Nitro-Reste, Ether-Reste, wie beipielsweise -Alkylen($C_1$-$C_4$)-O-Alkyl($C_1$-$C_4$), Alkyl($C_1$-$C_4$)-, Alkoxy($C_1$-$C_4$)-, Aroxy-Reste, wie beispielsweise Phenoxy-Reste, Halogenalkyl($C_1$-$C_4$)-, Halogenalkoxy($C_1$-$C_4$)-Reste oder Ester-Reste, wie beipielsweise -C(O)O-Alkyl($C_1$-$C_4$), substituiert sein können,

und die Reste $R_{13}$ bis $R_{16}$ unabhängig voneinander Wasserstoffatome, geradkettige oder verzweigte, gesättigte oder ungesättigte Alkyl($C_1$-$C_8$)-Reste, Aryl- oder Heteroaryl-Reste, wie beipielsweise Phenyl-, Naphthyl- oder Pyridyl-Reste, Aralkyl-Reste, wie beispielsweise Tolyl-Reste, Aralkoxy-Reste, wie beispielsweise Methoxyphenyl-Reste, Alkaryl-Reste, wie beispielsweise Benzyl-Reste, Cycloalkyl-Reste, wie beispielsweise Cyclopentyl- oder Cyclohexylreste, Carboxyl-, Sulfonsäure-, Cyano-Reste, Carboxylat-Reste, wie beipielsweise -O-C(O)-Alkyl($C_1$-$C_4$), Carboxamid-Reste, wie beispielsweise -NH-C(O)-Alkyl($C_1$-$C_4$), Sulfonamid-Reste, wie beispielsweise -NH-$SO_2$-Alkyl($C_1$-$C_4$), Keto-Reste, wie beipielsweise -C(O)-Alkyl($C_1$-$C_4$), Lactam-Reste, wie beispielsweise

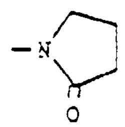 ,

oder Ether-Reste, wie beipielsweise -Alkylen($C_1$-$C_4$)-O-Alkyl($C_1$-$C_4$), bedeuten, wobei die Reste $R_{13}$ bis $R_{16}$ durch Chlor- oder Bromatome, Hydroxyl-, Carboxyl-, Sulfonsäure-, Cyano-, Mercapto-Reste, Carboxamid-Reste, wie beispielsweise -NH-CO-Alkyl($C_1$-$C_4$), Sulfonamid-Reste, wie beispielsweise -NH-$SO_2$-Alkyl($C_1$-$C_4$), primäre, sekundäre oder teriäre Amino-Reste, wie beispielsweise -NH[Alkyl($C_1$-$C_4$)], -N[Alkyl($C_1$-$C_4$)]$_2$ oder Nitro-Reste substituiert sein können,

und $X^-$ bzw. $Y^-$ jeweils das stöchometrische Äquivalent eines Anions oder eines Gemisches von Anionen bedeuten, wie beispielsweise $F^-$, $Cl^-$, $Br^-$, $J^-$, $NO_3^-$, $OH^-$, $HSO_4^-$, $SO_4^{2-}$, $S^{2-}$, $SO_3^{2-}$, $S_2O_3^{2-}$, $HCO_3^-$, $CO_3^{2-}$, $H_2PO_4^-$, $HPO_4^{2-}$, $PO_4^{3-}$, $CN^-$, Cyanat, Isocyanat, Thiocyanat, Zinktetracyanat, Zinktetrathiocyanat, Perchlorat, $BF_4^-$, $PF_6^-$ , B(Aryl)$_4^-$, wie z.B. Tetraphenylborat, Tetra(fluorphenyl)borat, Tetra(chlorphenyl)borat, Tetratolylborat, Tetranaphthylborat, Tetra(methoxyphenyl)borat, Tetrabiphenylborat, Tetrabenzylborat oder Tetrapyridylborat, Ethyl- und Methylsulfat, Phenolat, Nitrophenolat, gesättigtes oder ungesättigtes, aliphatisches, cyloaliphatisches oder aromatisches Carboxylat oder Sulfonat, wie z.B. Acetat, Lactat, Benzoat, Salicylat, 2-Hydroxy-3-naphthoat, 2-Hydroxy-6-naphthoat, Ethylsulfonat, Phenylsulfonat oder Tosylat, ferner perfluoriertes gesättigtes oder ungesättigtes, aliphatisches, cyloaliphatisches oder aromatisches Carboxylat oder Sulfonat, wie z.B. Perfluoracetat, Perfluoralkylbenzoat, Perfluorethylsulfonat oder Perfluoralkylbenzolsulfonat, sowie gesättigtes oder ungesättigtes, aliphatisches, cycloaliphaitsches oder aromatisches Di- und Tricarboxylat, wie z.B. Citrat, Oxalat oder Succinat, bzw. Di- und Trisulfonat, Wolframat, Molybdat oder Heteropolysäure-Anion, wie beipielsweise Phosphomolybdat, -wolframat, Silicomolybdat, -wolframat, bedeuten, wobei ganz besonders die Anionen $F^-$, $Cl^-$, $Br^-$, $J^-$, $BF_4^-$, B(Aryl)$_4^-$, $PF_6^-$ und $P(Mo_3O_{10})_4^{3-}$ geeignet sind.

Ganz besonders geeignete Verbindungen sind beispielsweise

- Homopolymere aus

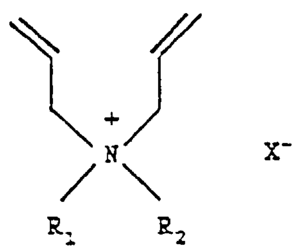

mit $X^-$ = $Cl^-$, $BF_4^-$, B(Phenyl)$_4^-$, $PF_6^-$ , $R_1$ = H, $CH_3$, $R_2$ = $CH_3$, $C_8H_{17}$ und einem Molekulargewicht von etwa 20000 bis etwa 250000,

- Copolymere aus

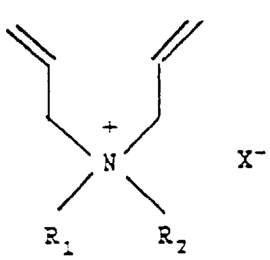 und 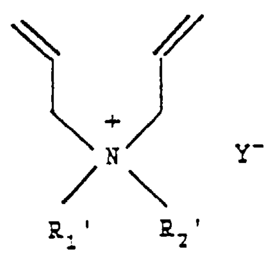

mit $X^-$ und $Y^-$ = $Cl^-$, $BF_4^-$, B(Phenyl)$_4^-$, $PF_6^-$ , $R_1$ und $R_1'$ = H, $CH_3$, $R_2$ und $R_2'$ = $CH_3$, $C_8H_{17}$, einem Molekulargewicht von etwa 20000 bis etwa 250000 und einem molaren Monomerenverhältnis im Copolymeren von etwa 0,5:0,5 bis etwa 0,95:0,05,

- Copolymere aus

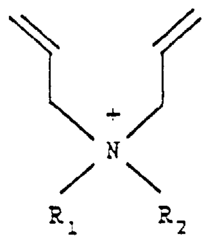

$X^-$ und

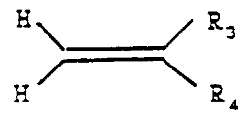

mit $X^-$ und $Y^-$ = $Cl^-$, $BF_4^-$, $B(Phenyl)_4^-$, $PF_6^-$ , $R_1$ = H, $CH_3$, $R_2$ = $CH_3$, $C_8H_{17}$, $R_3$ = H, $CH_3$, $R_4$ = COOH, $C(O)NH_2$, $OC(O)CH_3$, CN, einem Molekulargewicht von etwa 20000 bis etwa 250000 und einem molaren Monomerenverhältnis im Copolymeren von etwa 0,5:0,5 bis etwa 0,95:0,05.

An Einzelverbindungen seien beispielsweise genannt

- ein Homopolymeres aus

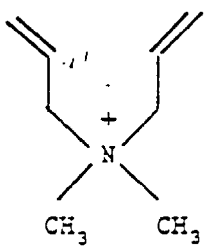

$Cl^-$ (1)

mit einem Molekulargewicht von etwa 100000,

- ein Homopolymeres aus

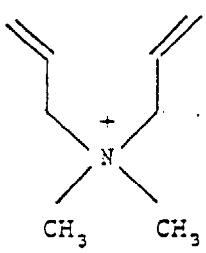

$BF_4^-$ (2)

mit einem Molekulargewicht von etwa 100000,

- ein Homopolymeres aus

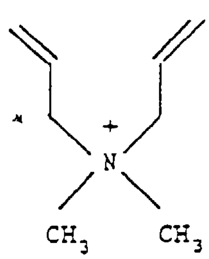

$B(Phenyl)_4^-$ (3)

mit einem Molekulargewicht von etwa 100000,

- ein Homopolymeres aus

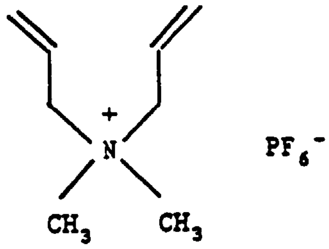

(4)

mit einem Molekulargewicht von etwa 100000,

- ein Copolymeres aus

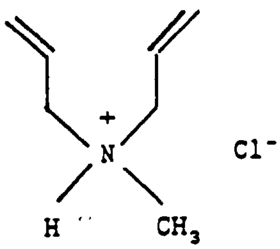

und

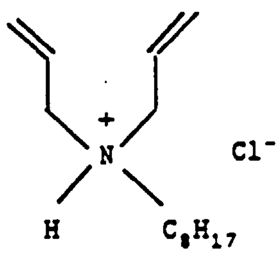

(5)

mit einem Molekulargewicht von etwa 100000 und einem molaren Monomerenverhältnis im Copolymeren von etwa 0,8:0,2,

- ein Copolymeres aus

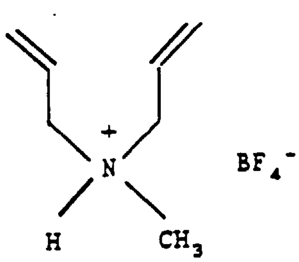

und

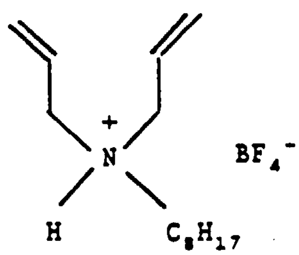

(6)

mit einem Molekulargewicht von etwa 100000 und einem molaren Monomerenverhältnis im Copolymeren von etwa 0,8:0,2,

- ein Copolymeres aus

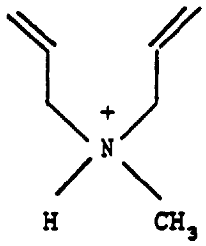 $B(Phenyl)_4^-$ und 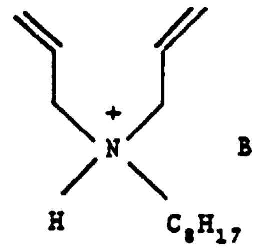 $B(Phenyl)_4^-$ (7)

mit einem Molekulargewicht von etwa 100000 und einem molaren Monomerenverhältnis im Copolymeren von etwa 0,8:0,2,

- ein Copolymeres aus

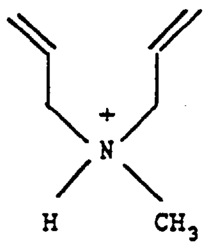 $PF_6^-$ und 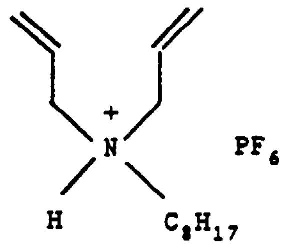 $PF_6^-$ (8)

mit einem Molekulargewicht von etwa 100000 und einem molaren Monomerenvorhältnis im Copolymeren von etwa 0,8:0,2,

- ein Copolymeres aus

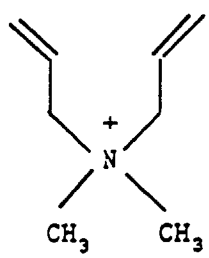 $Cl^-$ und 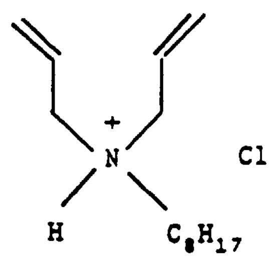 $Cl^-$ (9)

mit einem Molekulargewicht von etwa 100000 und einem molaren Monomerenverhältnis im Copolymeren von etwa 0,8:0,2,

- ein Copolymeres aus

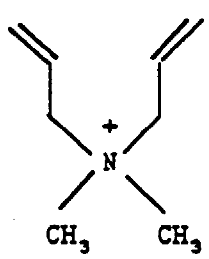 $BF_4^-$ und 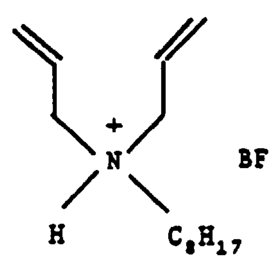 $BF_4^-$ (10)

mit einem Molekulargewicht von etwa 100000 und einem molaren Monomerenverhältnis im Copolymeren von

etwa 0,8:0,2,

- ein Copolymeres aus

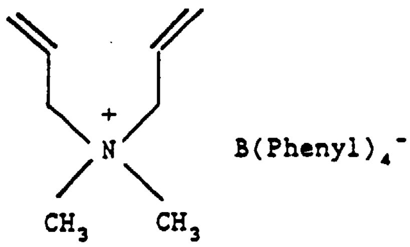 und 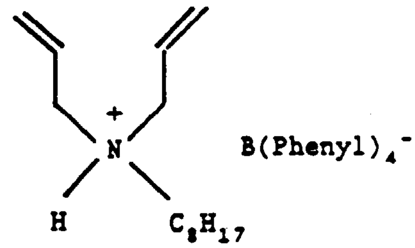 (11)

mit einem Molekulargewicht von etwa 100000 und einem molaren Monomerenverhältnis im Copolymeren von etwa 0,8:0,2,

- ein Copolymeres aus

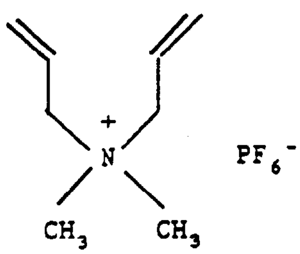 und 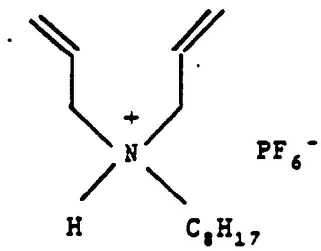 (12)

mit einem Molekulargewicht von etwa 100000 und einem molaren Monomerenverhältnis im Copolymeren von etwa 0,8:0,2,

- ein Copolymeres aus

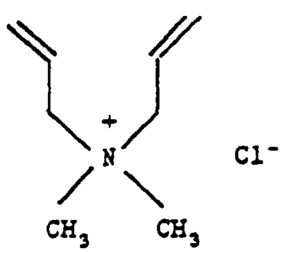 und 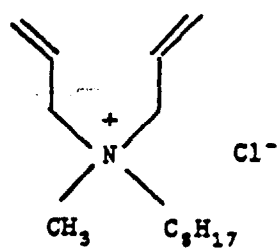 (13)

mit einem Molekulargewicht von etwa 100000 und einem molaren Monomerenverhältnis im Copolymeren von etwa 0,95:0,05,

- ein Copolymeres aus

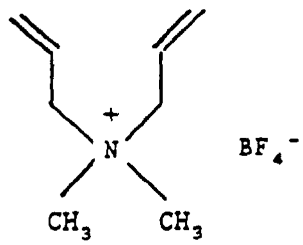 und 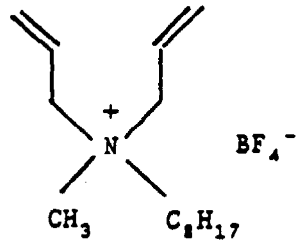 (14)

mit einem Molekulargewicht von etwa 100000 und einem molaren Monomerenverhältnis im Copolymeren von etwa 0,95:0,05,

- ein Copolymeres aus

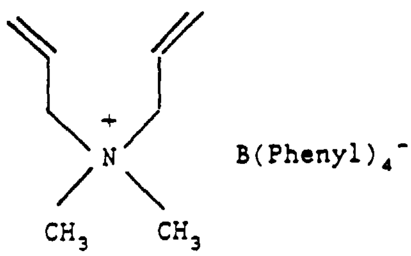 und 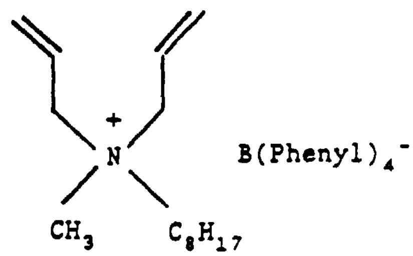 (15)

mit einem Molekulargewicht von etwa 100000 und einem molaren Monomerenverhältnis im Copolymeren von etwa 0,95:0,05,

- ein Copolymeres aus

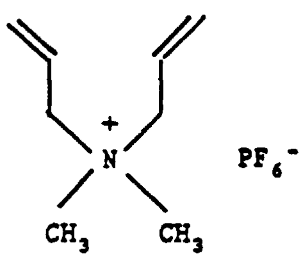 und 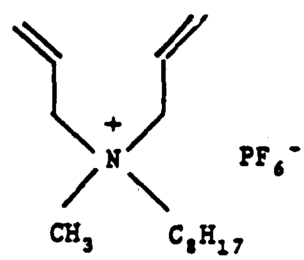 (16)

mit einem Molekulargewicht von etwa 100000 und einem molaren Monomerenverhältnis im Copolymeren von 0,95 zu 0,05,

- ein Copolymeres aus

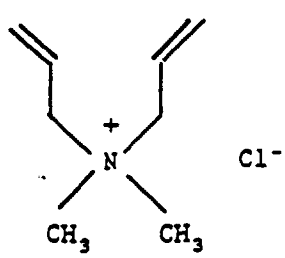 und 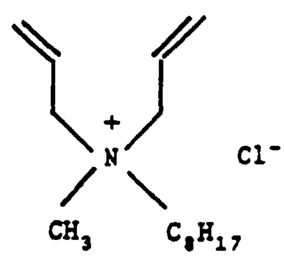 (17)

mit einem Molekulargewicht von etwa 100000 und einem molaren Monomerenverhältnis im Copolymeren von 0,8 zu 0,2,

- ein Copolymeres aus

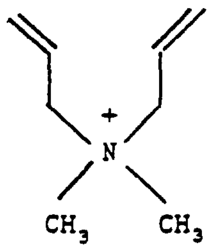 $BF_4^-$ und 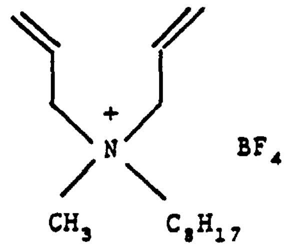 $BF_4^-$ (18)

mit einem Molekulargewicht von etwa 100000 und einem molaren Monomerenverhältnis im Copolymeren von etwa 0,8:0,2,

- ein Copolymeres aus

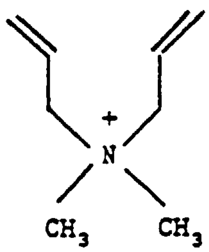 $B(Phenyl)_4^-$ und 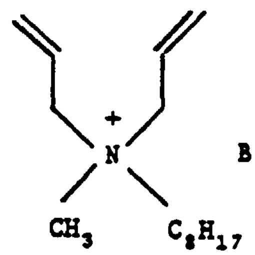 $B(Phenyl)_4^-$ (19)

mit einem Molekulargewicht von etwa 100000 und einem molaren Monomerenverhältnis im Copolymeren von etwa 0,8:0,2,

- ein Copolymeres aus

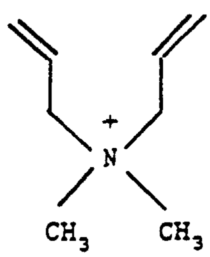 $PF_6^-$ und 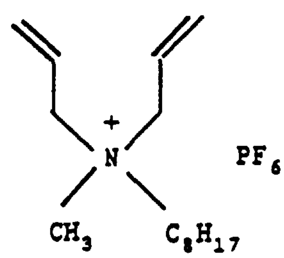 $PF_6^-$ (20)

mit einem Molekulargewicht von etwa 100000 und einem molaren Monomerenverhältnis im Copolymeren von 0,8 zu 0,2,

- ein Copolymeres aus

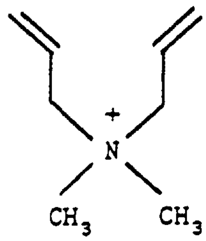 $Cl^-$ und 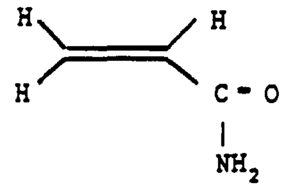 (21)

mit einem Molekulargewicht von etwa 100000 und einem molaren Monomerenverhältnis im Copolymeren von etwa 0,8:0,2,

- ein Copolymeres aus

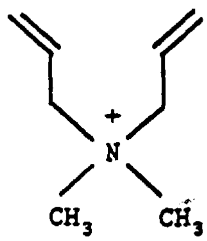 $BF_4^-$ und 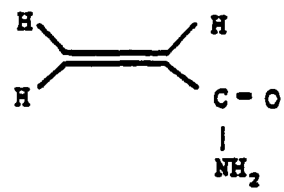 (22)

mit einem Molekulargewicht von etwa 100000 und einem molaren Monomerenverhältnis im Copolymeren von etwa 0,8:0,2,

- ein Copolymeres aus

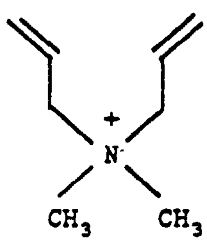 $B(Phenyl)_4^-$ und 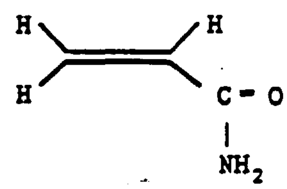 (23)

mit einem Molekulargewicht von etwa 100000 und einem molaren Monomerenverhältnis im Copolymeren von etwa 0,8:0,2,

- ein Copolymeres aus

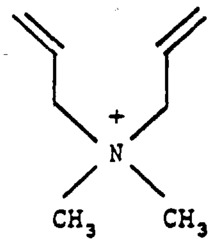 $PF_6^-$ und 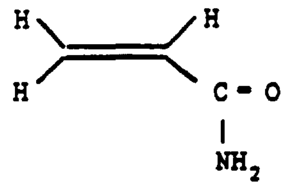 (24)

mit einem Molekulargewicht von etwa 100000 und einem molaren Monomerenverhältnis im Copolymeren von etwa 0,8:0,2.

Die Herstellung der Verbindungen der allgemeinen Formeln (I) bis (III) und deren Homo- bzw. Copolymerisate geschieht in an sich bekannter Weise, die in der Literatur ausführlich beschrieben ist [z.B. G.B. Butler, R.J. Angelo, J. Am. Chem Soc. 79(1957), 3128-31; G.B. Butler in: E.J. Goethals, "Polymeric Amines and Ammonium Salts", Pergamon Press, 1980, 125-42; D.H. Solomon, D.G. Hawthorne, J. Macromol. Sci.-Rev. Macromol. Chem. C15(1976), 143-64; Houben-Weyl, "Methoden der Organischen Chemie", Bd. XIV/1, Thieme-Verlag, Stuttgart, 1961, 561-1182; K. Weissermel, H.-J. Arpe, "Industrielle Organische Chemie", Verlag Chemie, Weinheim, 1988, 230-51; DD-PS 127729; EP-PS 0103698; US-PS 3288770].

So werden die Verbindungen der allgemeinen Formeln (I) und (II) beispielsweise durch Umsetzung von Allylhalogeniden mit N,N-Dialkylallylaminen oder durch Reduktion von Alkylnitrilen mit anschließender Umsetzung des Amins mit Allylhalogeniden und Quaternisierung des Diallylamins hergestellt.

Verbindungen der allgemeinen Formel (III) werden beispielsweise hergestellt durch Addition von Halogenwasserstoffen an Ethin, aus Ethylenchlorhydrin durch Umsetzung mit NaCN und Alkoholen, aus Veresterung von Milchsäure mit anschließender Thermolyse, durch Umsetzung von Ethen mit Essigsäure, durch Friedel-Crafts-Alkylierung von Aromaten mit anschließender Crackung, durch Ammonoxidation von Propen oder katalytische Hydrolyse von Acrylamid.

Homopolymerisate von Monomeren der allgemeinen Formeln (I) und (II) sowie Copolymerisate von Gemischen zweier Monomerer der allgemeinen Formeln (I) bis (III) werden hergestellt durch beipielsweise radikalische Homo- oder Copolymerisation unter Inertgas in polaren Lösemitteln, wie beispielsweise Wasser oder Dimethylformamid, mithilfe von radikalischen Startern, wie beispielsweise t-Butylhydroperoxid oder Ammoniumperoxidisulfat, wobei als Monomere bevorzugt die Halogenidsalze eingesetzt werden.

Die Herstellung der verschiedenen Salze, beispielsweise der Verbindungen (2) bis (4), (6) bis (8), (10) bis (12), (14) bis (16), (18) bis (20) und (22) bis (24), erfolgt durch Anionenaustausch, z.B. durch Ausfällen aus wäßrigem Medium, wie in den Herstellungsbeispielen beschrieben.

Der besondere Vorteil der erfindungsgemäß beanspruchten Verbindungen ist, daß sie farblos sind und einen hohen Ladungssteuereffekt aufweisen und daß dieser über einen längeren Aktivierzeitraum hinweg (bis zu 24 Std.) konstant ist.

So zeigt z.B. ein Test-Toner mit 1 Gewichtsprozent der Verbindung (3) nach 10 Min. eine Aufladung von -8 μC/g, nach 30 Min. von -21 μC/g, nach 2 Std. von -31 μC/g und nach 24 Std. von -33 μC/g (Anwendungsbeispiel 3). Ein Test-Toner mit 1 Gewichtsprozent der Verbindung (13) zeigt folgendes Verhalten: +30 μC/g nach 10 Min., +25 μC/g nach 30 Min., +16 μC/g nach 2 Std. und +12 μC/g nach 24 Std. (Anwendungsbeispiel 10). Ein Test-Toner mit 1 Gewichtsprozent der Verbindung (15) zeigt folgende Werte: -20 μC/g nach 10 Min., -28 μC/g nach 30 Min., -33 μC/g nach 2 Std. und -33 μC/g nach 24 Std. (Anwendungsbeispiel 11).

Ein Test-Pulverlack mit 1 Gewichtsprozent der Verbindung (3) zeigt nach 10 Min. eine Aufladung von -3 μC/g, -1 μC/g nach 30 Min., +4 μC/g nach 2 Std. und +2 μC/g nach 24 Std. (Anwendungsbeispiel 5). Ein Test-Pulverlack mit 1 Gewichtsprozent der Verbindung (1) zeigt nach 10 Min. eine Aufladung von -6 μC/g, -7 μC/g nach 30 Min., -7 μC/g nach 2 Std. und -6 μC/g nach 24 Std. (Anwendungsbeispiel 6).

Der hohe Ladungssteuereffekt wird umso deutlicher, wenn zum Vergleich z.B. das Aufladungsverhalten des reinen Tonerbindemittels "Dialec S-309" (Vergleichsbeispiel 1: -4 μC/g nach 10 Min., -12 μC/g nach 30 Min., -27 μC/g nach 2 Std., -48 μC/g nach 24 Std.), des reinen Pulverlackbindemittels "Alftalat AN 757" (Vergleichsbeispiel 2: -35 μC/g nach 10 Min., -32 μC/g nach 30 Min., -24 μC/g nach 2 Std., -13 μC/g nach 24 Std.) und des reinen Pulverlackbindemittels "Alftalat AN 792" (Vergleichsbeispiel 3: -15 μC/g nach 10 Min., -17 μC/g nach 30 Min., -13 μC/g nach 2 Std., -2 μC/g nach 24 Std.) betrachtet werden. In den Anwendungsbeipielen 7, 8und 9 wird beim Vergleich mit den Vergleichsbeispielen 4, 5 und 6 der hohe Ladungssteuereffekt besonders deutlich, da zusätzlich triboelektrisch problematische Farbmittel (C. I. Pigment Red 57:1 und C. I. Solvent Blue 125) mitverwendet wurden.

Für die Praxis von großer Bedeutung ist, daß die erfindungsgemäß beanspruchten Verbindungen chemisch inert und gut verträglich mit Bindemitteln, wie z.B. Styrolacrylaten, Polyestern, Epoxiden, Polyurethanen, sind. Zudem sind die Verbindungen thermostabil und können somit ohne Schwierigkeiten mit den gängigen Verfahren (Extrudieren, Kneten) unter den üblichen Bedingungen (Temperaturen zwischen 100 °C und 200 °C) in die gängigen Bindemittel eingearbeitet werden. Die Synthese der erfindungsgemäß beanspruchten Verbindungen ist wenig aufwendig, und die Produkte fallen in hoher Reinheit an.

Die erfindungsgemäß verwendeten Verbindungen werden in der Regel in einer Konzentration von etwa 0,01 bis etwa 30 Gewichtsprozent, vorzugsweise von etwa 0,1 bis 5,0 Gewichtsprozent, in das jeweilige Bindemittel in bekannter Weise, z.B. durch Extrudieren oder Einkneten, homogen eingearbeitet. Dabei können die Ladungssteuermittel für Toner bzw. ladungsverbessernde Mittel für Pulver und Lacke zur Oberflächenbeschichtung, insbesondere für triboelektrisch bzw. elektrokinetisch versprühte Pulverlacke, als getrocknete und gemahlene Pulver, Dispersionen oder Lösungen, Preßkuchen, Masterbatch, als auf geeignete Träger, wie z.B. Kieselgel, $TiO_2$, $Al_2O_3$, aus wäßriger oder nichtwäßriger Lösung aufgezogene Verbindungen oder in sonstiger Form zugegeben werden. Ebenso können die erfindungsgemäß eingesetzten Verbindungen grundsätzlich auch schon bei der Herstellung der jeweiligen Bindemittel zugegeben werden, d.h. im Verlauf von deren Polymerisation, Polyaddition oder Polykondensation. Die Höhe der elektrostatischen Aufladung der elektrophotographischen Toner bzw. der Pulverlacke, in welche die erfindungsgemäß beanspruchten Ladungssteuermittel homogen eingearbeitet wurden, wurde an Standardtestsystemen unter gleichen Bedingungen (wie gleiche Dispergierzeiten, gleiche Teilchengrößenverteilug, gleiche Teilchenform) bei Raumtemperatur und 50 % relativer Luftfeuchte gemessen. Die elektrostatische Aufladung des Toners bzw. Pulverlackes erfolgte durch Verwirbelung mit einem Carrier, d.h. einem standardisiertem Reibungspartner (3 Gewichtsteile Toner auf 97 Gewichtsteile Carrier), auf einer Rollbank (150 Umdrehungen pro Minute). Anschließend wurde an einem üblichen q/m-Meßstand die elektrostatische Aufladung gemessen (vgl. J.H. Dessauer, H.E. Clark, "Xerography and related Processes", Focal Press, N. Y., 1965, Seite 289; J.F. Hughes, "Electrostatic Powder Coating", Research Studies Press Ltd., Letchworth, Hertfordshire, England, 1984, Chapter 2). Bei der Bestimmung des q/m-Wertes ist die Teilchengröße von großem Einfluß, weshalb bei den durch Sichtung erhaltenen Toner- bzw. Pulverlackproben streng auf einheitliche Teilchengrößenverteilung geachtet wurde.

Die nachstehenden Beispiele dienen zur Erläuterung der Erfindung, ohne diese darauf zu beschränken. Die angegebenen Teile bedeuten Gewichtsteile.

## HERSTELLUNGSBEISPIELE

### Herstellungsbeispiel 1

10 g (0,06 Mol) eines Homopolymeren aus Diallyldimethylammoniumchlorid (Molekulargewicht ca. 100000 g/Mol) werden in 200 ml Wasser gelöst, und 7,5 g (0,07 Mol) Natriumtetrafluoroborat, gelöst in 100 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.

Ausbeute : 12,2 g (92,4 % der Theorie) der Verbindung (2), weißes Pulver
Schmelzpunkt : > 300 °C (Zersetzung)

| | | | | | |
|---|---|---|---|---|---|
| Elementaranalyse: | ber. | 45,1 % C, | 7,5 % H, | 6,6 % N, | 35,7 % F |
| | gef. | 44,5 % C, | 7,9 % H, | 6,5 % N, | 33,4 % F |

### Herstellungsbeispiel 2

Es wird wie in Herstellungsbeispiel 1 verfahren, aber anstelle von Natriumtetrafluoroborat werden 23,9 g (0,07 Mol) Natriumtetraphenylborat verwendet.

Ausbeute : 27,2 g (98,7 % der Theorie) der Verbindung (3), weißes Pulver
Schmelzpunkt : 225 °C

| | | | | | |
|---|---|---|---|---|---|
| Elementaranalyse: | ber. | 86,3 % C, | 8,1 % H, | 3,1 % N, | 2,4 % B |
| | gef. | 84,2 % C, | 8,1 % H, | 3,4 % N, | 2,0 % B |

Herstellungsbeispiel 3

10 g (0,06 Mol) eines Copolymeren aus Diallyldimethylammoniumchlorid und Diallylmethyloktylammoniumchlorid (Molekulargewicht ca. 100000 g/Mol, molares Verhältnis der Monomereinheiten im Copolymer etwa 0,8 zu 0,2) werden in 400 ml Wasser gelöst und 7,5 g (0,07 Mol) Natriumtetrafluoroborat, gelöst in 100 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.

Ausbeute : 12,4 g (89,9 % der Theorie) der Verbindung (10), weißes Pulver
Schmelzpunkt : > 300 °C (Zersetzung)

| | | | | | |
|---|---|---|---|---|---|
| Elementaranalyse: | ber. | 48,0 % C, | 8,0 % H, | 6,1 % N, | 33,0 % F |
| | gef. | 46,9 % C, | 8,2 % H, | 6,2 % N, | 32,7 % F |

Herstellungsbeispiel 4

Es wird wie in Herstellungsbeispiel 3 verfahren, aber anstelle von Natriumtetrafluoroborat werden 24,0 g (0,07 Mol) Natriumtetraphenylborat, gelöst in 150 ml Wasser, verwendet.

Ausbeute : 26,7 g (96,3 % der Theorie) der Verbindung (11), weißes Pulver
Schmelzpunkt : 205-210 °C

| | | | | | |
|---|---|---|---|---|---|
| Elementaranalyse: | ber. | 86,2 % C, | 8,3 % H, | 3,0 % N, | 2,4 % B |
| | gef. | 85,6 % C, | 8,4 % H, | 3,3 % N, | 2,2 % B |

Herstellungsbeispiel 5

10 g (0,06 Mol) eines Copolymeren aus Diallyldimethylammoniumchlorid und Diallylmethyloktylammoniumchlorid (Molekulargewicht ca. 100000 g/Mol, molares Verhältnis der Monomereinheiten im Copolymer etwa 0,95 zu 0,05) werden in 400 ml Wasser gelöst, und 7,5 g (0,07 Mol) Natriumtetrafluoroborat, gelöst in 100 ml Wasser, werden langsam unter Rühren bei Raumtemperatur zugetropft. Der schwach bernsteinfarbene Niederschlag wird abgesaugt, mit Wasser chloridfrei gewaschen und bei 100 °C im Vakuumschrank getrocknet.

Ausbeute : 9,5 g (72,0 % der Theorie) der Verbindung (14), schwach bernsteinfarbenes Pulver
Schmelzpunkt : 270 °C (Zersetzung)

| | | | | | |
|---|---|---|---|---|---|
| Elementaranalyse: | ber. | 46,0 % C, | 7,7 % H, | 6,4 % N, | 5,0 % B |
| | gef. | 45,5 % C, | 8,0 % H, | 6,7 % N, | 4,3 % B |

Herstellungsbeispiel 6

Es wird wie in Herstellungsbeispiel 5 verfahren, aber anstelle von Natriumtetrafluoroborat werden 24,0 g(0,07 Mol) Natriumtetraphenylborat, gelöst in 150 ml Wasser, verwendet.

Ausbeute : 25,8 g (95,6 % der Theorie) der Verbindung (15), weißes Pulver
Schmelzpunkt : 240 °C

| | | | | | |
|---|---|---|---|---|---|
| Elementaranalyse: | ber. | 86,3 % C, | 8,2 % H, | 3,1 % N, | 2,4 % B |
| | gef. | 85,7 % C, | 8,8 % H, | 3,0 % N, | 2,2 % B |

Herstellungsbeispiel 7

10 g (0,08 Mol) eines Copolymeren aus Diallyldimethylammoniumchlorid und Acrylamid (Molekulargewicht ca. 100000 g/Mol, molares Verhältnis der Monomereinheiten im Copolymer etwa 0,8 zu 0,2) werden in 400 ml Wasser gelöst, und 9,9 g (0,09 Mol) Natriumtetrafluoroborat, gelöst in 200 ml Wasser, werden langsam unter Rühren bei Raumtemperatur zugetropft. Der weiße Niederschlag wird abgesaugt, mit Wasser chloridfrei gewaschen und bei 100 °C im Vakuumschrank getrocknet.

Ausbeute : 11,6 g (78,2 % der Theorie) der Verbindung (22), weißes Pulver
Schmelzpunkt : > 300 °C (Zersetzung)

| | | | | | |
|---|---|---|---|---|---|
| Elementaranalyse: | ber. | 45,4 % C, | 7,5 % H, | 7,6 % N, | 4,8 % B |
| | gef. | 45,1 % C, | 7,7 % H, | 7,4 % N, | 4,3 % B |

ANWENDUNGSBEISPIELE

Anwendungsbeispiel 1

1,0 Teil der Verbindung (1) wurde mittels eines Kneters der Firma Werner & Pfleiderer (Stuttgart) 45 Minuten in 99,0 Teile Tonerbindemittel ("Dialec S-309" der Firma Diamond Shamrock, Styrol-Methacrylat-Copolymer 60:40) homogen eingearbeitet. Anschließend wurde auf der Laboruniversalmühle 100 LU (Firma Alpine, Augsburg) gemahlen und dann auf dem Zentrifugalsichter 100 MZR (Firma Alpine) klassifiziert.
Die gewünschte Teilchenfraktion (4-25 µm) wurde mit einem Carrier aus mit Styrol-Methacrylat-Copolymer 90:10 beschichteten Magnetit-Teilchen der Größe 50-200 µm des Typs "90 µm Xerographic Carrier" der Firma Plasma Materials Inc. (Manchester, NH, USA) aktiviert.

Die Messung erfolgte an einem üblichen q/m-Meßstand (Firma Epping GmbH, Neufahrn). Durch Verwendung eines Siebes mit einer Maschenweite von 25 µm (Firma Gebr. Kufferath, Düren) wurde sichergestellt, daß bei den Tonerausblasungen kein Carrier mitgerissen werden konnte. Die Messungen erfolgten bei Raumtemperatur und 50 % relativer Luftfeuchte.
In Abhängigkeit von der Aktivierdauer wurden folgende q/m-Werte [µC/g] gemessen:

| Aktivierdauer | q/m [µC/g] |
|---|---|
| 10 Min. | -4 |
| 30 Min. | -8 |
| 2 Std. | -13 |
| 24 Std. | -19 |

Anwendungsbeispiel 2

0,5 Teile der Verbindung (3) wurden wie in Anwendungsbeispiel 1 beschrieben in 99,5 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | +1 |
| 30 Min. | -5 |
| 2 Std. | -14 |
| 24 Std. | -26 |

Anwendungsbeispiel 3

1,0 Teil der Verbindung (3) wurde wie in Anwendungsbeispiel 1 beschrieben in 99,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -8 |
| 30 Min. | -21 |
| 2 Std. | -31 |
| 24 Std. | -33 |

Anwendungsbeispiel 4

2,5 Teile der Verbindung (3) wurden wie in Anwendungsbeispiel 1 beschrieben in 97,5 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -1 |
| 30 Min. | -6 |
| 2 Std. | -15 |
| 24 Std. | -25 |

Anwendungsbeispiel 5

1,0 Teil der Verbindung (3) wurde wie in Anwendungsbeispiel 1 beschrieben in 99,0 Teile Pulverlackbindemittel ("Alftalat AN 757" der Hoechst AG, carboxylgruppenhaltiges Polyesterharz) homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -3 |
| 30 Min. | -1 |
| 2 Std. | +4 |
| 24 Std. | +2 |

Anwendungsbeispiel 6

1,0 Teil der Verbindung (1) wurde wie in Anwendungsbeispiel 1 beschrieben in 99,0 Teile Pulverlackbindemittel ("Alftalat AN 792" der Hoechst AG, hydroxylgruppenhaltiges Polyesterharz) homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -6 |
| 30 Min. | -7 |
| 2 Std. | -7 |
| 24 Std. | -6 |

Anwendungsbeipiel 7

2,5 Teile der Verbindung (3) und 2,5 Teile des Farbmittels C. I. Solvent Blue 125 wurden wie in Anwendungsbeispiel 1 beschrieben in 95,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | +2 |
| 30 Min. | -2 |
| 2 Std. | -5 |

(fortgesetzt)

| Aktivierdauer | q/m [µC/g] |
|---|---|
| 24 Std. | -9 |

Anwendungsbeispiel 8

2,5 Teile der Verbindung (3) und 2,5 Teile des Farbmittels C. I. Pigment Red 57:1 wurden wie in Anwendungsbeispiel 1 beschrieben in 95,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -21 |
| 30 Min. | -30 |
| 2 Std. | -35 |
| 24 Std. | -38 |

Anwendungsbeispiel 9

1,0 Teil der Verbindung (3) und 5,0 Teile des Farbmittels C. I. Pigment Red 57:1 wurden wie in Anwendungsbeispiel 1 beschrieben in 94,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -8 |
| 30 Min. | -15 |
| 2 Std. | -25 |
| 24 Std. | -27 |

Anwendungsbeispiel 10

1,0 Teil der Verbindung (13) Wurde wie in Anwendungsbeispiel 1 beschrieben in 99,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | +30 |
| 30 Min. | +25 |
| 2 Std. | +16 |
| 24 Std. | +12 |

Anwendungsbeispiel 11

1,0 Teil der Verbindung (15) wurde wie in Anwendungsbeispiel 1 beschrieben in 99,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -20 |
| 30 Min. | -28 |
| 2 Std. | -33 |
| 24 Std. | -33 |

Vergleichsbeispiel 1

(zu den Anwendungsbeispielen 1 bis 4 und 10 - 11)

100 Teile des in Anwendungsbeispiel 1 beschriebenen Tonerbindemittels "Dialec S-309" wurden ohne weitere Zusatzstoffe wie in Anwendungsbeispiel 1 beschrieben 45 Minuten in einem Kneter geknetet, anschließend gemahlen, klassifiziert und an einem q/m-Meßstand vermessen. In Abhängigkeit von der Aktivierdauer wurden folgende q/m-Werte [µC/g] gemessen:

| Aktivierdauer | q/m [µC/g] |
|---|---|
| 10 Min. | -4 |
| 30 Min. | -12 |
| 2 Std. | -27 |
| 24 Std. | -48 |

Vergleichsbeispiel 2

(zu Anwendungsbeispiel 5)

Es wurde wie in Vergleichsbeispiel 1 verfahren, aber anstelle des Tonerbindemittels "Dialec S-309" das Pulverlackbindemittel "Alftalat AN 757" verwendet. In Abhängigkeit von der Aktivierdauer wurden folgende q/m-Werte [µC/g] gemessen:

| Aktivierdauer | q/m [µC/g] |
|---|---|
| 10 Min. | -35 |
| 30 Min. | -32 |
| 2 Std. | -24 |
| 24 Std. | -13 |

Vergleichsbeispiel 3

(zu Anwendungsbeispiel 6)

Es wurde wie in Vergleichsbeispiel 1 verfahren, aber anstelle des Tonerbindemittels "Dialec S-309" das Pulverlackbindemittel "Alftalat AN 792" verwendet. In Abhängigkeit von der Aktivierdauer wurden folgende q/m-Werte [µC/g] gemessen:

| Aktivierdauer | q/m [µC/g] |
|---|---|
| 10 Min. | -15 |
| 30 Min. | -17 |
| 2 Std. | -13 |
| 24 Std. | -2 |

Vergleichsbeispiel 4

(zum Anwendungsbeispiel 9)

5,0 Teile des Farbmittels C. I. Pigment Red 57:1 wurden wie in Anwendungsbeispiel 1 beschrieben in 95,0 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | -3 |

(fortgesetzt)

| Aktivierdauer | q/m [µC/g] |
|---|---|
| 30 Min. | -20 |
| 2 Std. | -52 |
| 24 Std. | -64 |

Vergleichsbeipiel 5

(zum Anwendungsbeispiel 8)

2,5 Teile des Farbmittels C. I. Pigment Red 57:1 wurden wie in Anwendungsbeispiel 1 beschrieben in 97,5 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | +3 |
| 30 Min. | -4 |
| 2 Std. | -21 |
| 24 Std. | -46 |

Vergleichsbeispiel 6

(zum Anwendungsbeispiel 7)

2,5 Teile des Farbmittels C. I. Solvent Blue 125 wurden wie in Anwendungsbeispiel 1 beschrieben in 97,5 Teile Tonerbindemittel homogen eingearbeitet. In Abhängigkeit von der Aktivierdauer wurden folgende q/m-Werte [µC/g] gemessen:

| Aktivierdauer | q/m [µC/g] |
|---|---|
| 10 Min. | +3 |
| 30 Min. | +5 |
| 2 Std. | +6 |
| 24 Std. | +5 |

**Patentansprüche**

1. Verwendung von polymeren Ammoniumsalzen mit einem Molekulargewicht von etwa 5000 bis etwa 500000 erhalten durch Homopolymerisation von Monomeren der allgemeinen Formeln (I) oder (II) sowie durch Copolymerisation von Gemischen zweier Monomerer der allgemeinen Formeln (I) bis (III) mit einem molaren Monomerenverhältnis von (I):(II) und (I):(III) und (II):(III) von etwa 0,5:0,5 bis etwa 0,95:0,05 im Copolymeren mit gegebenenfalls anschließendem Anionenaustausch

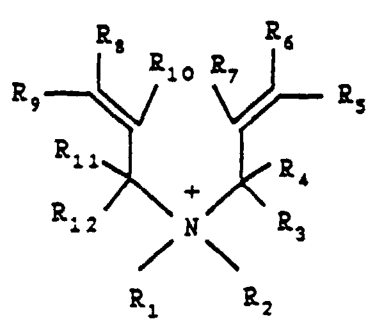

$X^-$ (I),

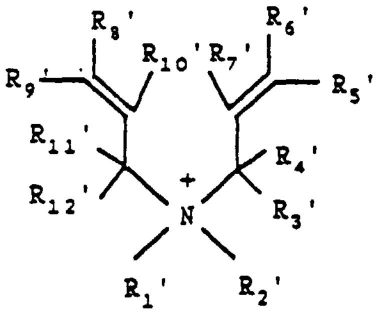

$Y^-$ (II),

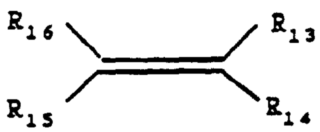

(III),

wobei die Reste $R_1$ bis $R_{12}$ und $R_1'$ bis $R_{12}'$ unabhängig voneinander jeweils ein Wasserstoffatom, Halogenatom, einen Hydroxyl-Rest, einen primären, sekundären oder tertiären Amino-Rest, einen Carbonsäure- oder Carbonsäureester-Rest, einen Sulfonsäure- oder Sulfonsäureester-Rest, einen Cyano-oder Nitro-Rest oder jeweils einen Rest auf Basis eines Kohlenwasserstoffes, der durch Heteroatome unterbrochen sein kann, und $X^-$ bzw. $Y^-$ jeweils das stöchiometrische Äquivalent eines organischen oder anorganischen Anions oder eines Gemisches von organischen und/oder anorganischen Anionen bedeuten, und die Reste $R_{13}$ bis $R_{16}$ unabhängig voneinander jeweils ein Wasserstoffatom, Chloratom, Bromatom, einen Hydroxyl-Rest, einen primären, sekundären oder tertiären Amino-Rest, einen Carbonsäure-Rest, einen Sulfonsäure- oder Sulfonsäureester-Rest, einen Cyano- oder Nitro-Rest oder jeweils einen Rest auf Basis eines Kohlenwasserstoffes, der durch Heteroatome unterbrochen sein kann, bedeuten, einzeln oder in Kombination als Ladungssteuermittel in elektrophotographischen Tonern und Entwicklern, die zum Kopieren bzw. Vervielfältigen von Vorlagen sowie zum Drucken von elektronisch, magnetisch oder optisch gespeicherten Informationen oder im Colorproofing eingesetzt werden; sowie als Ladungssteuermittel in Pulvern und Pulverlacken, wobei $R_{13}$ bis $R_{16}$ zusätzlich die Bedeutung eines Carbonsäureester-Restes haben können.

2. Verwendung von polymeren Ammoniumsalzen nach Anspruch 1,
dadurch gekennzeichnet, daß
$R_1$ und $R_2$ bzw. $R_1'$ und $R_2'$ unabhängig voneinander Wasserstoffatome, geradkettige oder verzweigte, gesättigte oder ungesättigte Alkyl($C_1$-$C_{18}$)-, Alkoxy($C_1$-$C_{18}$)-Reste, Polyoxalkylen-Reste der allgemeinen Formel -(Alkylen($C_1$-$C_5$)-O)$_n$-R, worin R ein Wasserstoffatom, ein Alkyl($C_1$-$C_4$)-Rest oder ein Acyl-Rest und n eine Zahl von 1 bis 10 ist, Aryl- oder Heteroaryl-Reste, Aralkyl-, Aralkoxy-, Alkaryl- oder Cycloalkyl-Reste bedeuten, und sich $R_1$ und $R_2$ bzw. $R_1'$ und $R_2'$ auch zu einem gesättigten oder ungesättigten, aromatischen oder nichtaromatischen 5- bis 7-gliedrigen Ringsystem zusammenschließen können, das weitere Heteroatome enthalten sowie substituiert und/oder durch Ankondensation von oder Verbrückung zu weiteren Ringsystemen modifiziert sein kann, wobei die Reste $R_1$ und $R_2$ bzw. $R_1'$ und $R_2'$ ein oder mehrere Heteroatome enthalten und durch Halogenatome, Hydroxyl-Carboxyl-, Sulfonsäure-, Cyano-, Mercapto-, Carboxamid-, Sulfonamid-, Urethan-, Keto-Reste, primäre, sekundäre oder teriäre Amino-Reste, Nitro-, Ether-, Alkyl($C_1$-$C_{30}$)-, Alkoxy($C_1$-$C_{30}$)-, Aroxy-, Halogenalkyl($C_1$-$C_{30}$)-, Halogenalkoxy($C_1$-$C_{30}$)- oder Ester-Reste substituiert sein können.

3. Verwendung von polymeren Ammoniumsalzen nach mindestens einem der Ansprüche 1 oder 2, dadurch gekennzeichnet, daß die Reste $R_3$ bis $R_{12}$ bzw. $R_3'$ bis $R_{12}'$ unabhängig voneinander Wasserstoffatome, Halogenatome, geradkettige oder verzweigte, gesättigte oder ungesättigte Alkyl($C_1$-$C_{18}$)-, Alkoxy($C_1$-$C_{18}$)-Reste, Polyoxalkylen-Reste der allgemeinen Formel -(Alkylen($C_1$-$C_5$)-O)$_n$-R, worin R ein Wasserstoffatom, ein Alkyl($C_1$-$C_4$)-Rest oder ein Acyl-Rest und n eine Zahl von 1 bis 10 ist, Aryl- oder Heteroaryl-Reste, Aralkyl-, Aralkoxy-, Aroxy-, Alkaryl- oder Cycloalkyl-Reste bedeuten, und sich zwei der Reste $R_3$ bis $R_{12}'$ bzw. $R_3'$ bis $R_{12}'$ auch zu einem gesättigten oder ungesättigten, aromatischen oder nichtaromatischen 5- bis 7-gliedrigen Ringsystem zusammenschließen können, das weitere Heteroatome enthalten sowie substituiert und/oder durch Ankondensation von oder Verbrük-

kung zu weiteren Ringsystemen modifiziert sein kann, wobei die Reste $R_3$ bis $R_{12}$ bzw. $R_3$' bis $R_{12}$' ein oder mehrere Heteroatome enthalten und durch Halogenatome, Hydroxyl-, Carboxyl-, Sulfonsäure-, Cyano-, Mercapto-, Carboxamid-, Sulfonamid-, Urethan-, Keto-Reste, primäre, sekundäre oder teriäre Amino-Reste, Nitro-, Ether-, Alkyl ($C_1$-$C_{30}$)-, Alkoxy($C_1$-$C_{30}$)-, Aroxy-, Halogenalkyl($C_1$-$C_{30}$)-, Halogenalkoxy($C_1$-$C_{30}$)- oder Ester-Reste substituiert sein können.

**4.** Verwendung von polymeren Ammoniumsalzen nach mindestens einem der Ansprüche 1 bis 3, dadurch gekennzeichnet, daß die Reste $R_{13}$ bis $R_{16}$ unabhängig voneinander Wasserstoffatome, Chloratome, Bromatome, geradkettige oder verzweigte, gesättigte oder ungesättigte Alkyl($C_1$-$C_{30}$)-Reste, Polyoxalkylen-Reste der allgemeinen Formel -(Alkylen($C_1$-$C_5$)-O)$_n$-R, worin R ein Wasserstoffatom, ein Alkyl($C_1$-$C_4$)-Rest oder ein Acyl-Rest und n eine Zahl von 1 bis 10 ist, Aryl- oder Heteroaryl-Reste, Aralkyl-, Aralkoxy-, Alkaryl- oder Cycloalkyl-Reste, Carboxyl-, Sulfonsäure-, Cyano-, Carboxamid-, Sulfonamid-, Carboxylat-, Keto-, Lactam- oder Ether-Reste bedeuten, wobei die Reste $R_{13}$ bis $R_{16}$ ein oder mehrere Heteroatome enthalten und durch Chlor- oder Bromatome, Hydroxyl-, Carboxyl-, Sulfonsäure-, Cyano-, Mercapto-, Carboxamid-, Sulfonamid-Reste, primäre, sekundäre oder tertiäre Amino-Reste oder Nitro-Reste substituiert sein können.

**5.** Verwendung von polymeren Ammoniumsalzen nach mindestens einem der Ansprüche 1 bis 4, dadurch gekennzeichnet, daß im Falle der Homopolymerisation von Monomeren der allgemeinen Formeln (I) oder (II) $R_1$ und $R_2$ und/oder $R_1$' und $R_2$' identisch oder verschieden sein können, und im Falle der Copolymerisation von Gemischen zweier Monomerer der Formeln (I) bis (III) sowohl die Reste $R_1$ und $R_1$' und/oder $R_2$ und $R_2$' als auch die Anionen $X^-$ und $Y^-$ identisch oder verschieden sein können.

**6.** Verwendung von polymeren Ammoniumsalzen nach mindestens einem der Ansprüche 1 bis 5, dadurch gekennzeichnet, daß in den in Anspruch 1 genannten Formeln (I) und (II) $X^-$ und $Y^-$ unabhängig voneinander ein Halogenid-, Nitrat-, Hydroxid-, Hydrogensulfat-, Sulfat-, Sulfid-, Sulfit-, Thiosulfat-, Hydrogencarbonat-, Carbonat-, Dihydrogenphosphat-, Hydrogenphosphat-, Phosphat-, Cyanid-, Cyanat-, Isocyanat-, Thiocyanat-, Zinktetracyanat-, Zinktetrathiocyanat-, Perchlorat-, $BF_4^-$-, $PF_6^-$-, $B(Aryl)_4^-$-, $CH_3OSO_3^-$-, $C_2H_5OSO_3^-$ Phenolat-, Nitrophenolat-Anion, ein gesättigtes oder ungesättigtes, aliphatisches, cyloaliphatisches oder aromatisches Carboxylat- oder Sulfonat-Anion, ein perfluoriertes gesättigtes oder ungesättigtes, aliphatisches, cycloaliphatisches oder aromatisches Carboxylat- oder Sulfonat-Anion, ein gesättigtes oder ungesättigtes, aliphatisches, cycloaliphatisches oder aromatisches Di- und Tricarbonsäure-Anion bzw. Di- und Trisulfonsäure-Anion, ein Wolframat-, Molybdat- oder Heteropolysäure-Anion darstellen, wobei diese Anionen auch in gemischter Form vorliegen können.

**7.** Verwendung von polymeren Ammoniumsalzen nach mindestens einem der Ansprüche 1 bis 6, dadurch gekennzeichnet, daß in den in Anspruch 1 genannten Formeln (I) bis (III) die Reste $R_1$ und $R_2$ bzw. $R_1$' und $R_2$' unabhängig voneinander Wasserstoffatome, Alkyl($C_1$-$C_8$)-, Cyclopentyl-, Cyclohexyl-, Phenyl-, Naphtyl-, Pyridyl-, Benzyl-, Tolyl- oder Methoxyphenyl-Reste bedeuten, wobei die genannten Reste durch Halogenatome, Hydroxyl-, Cyano-, Mercapto-Reste, primäre, sekundäre oder tertiäre Amino-Reste oder Nitro-Reste substituiert sein können,
und die Reste $R_3$ bis $R_{12}$ bzw. $R_3$' bis $R_{12}$' unabhängig voneinander Wasserstoffatome, Halogenatome, Alkyl($C_1$-$C_8$)-, Cyclopentyl-, Cyclohexyl-, Phenyl-, Naphthyl-, Pyridyl-, Benzyl-, Tolyl- oder Methoxyphenyl-Reste bedeuten, wobei die genannten Reste durch Halogenatome, Hydroxyl-, Cyano-, Mercapto-Reste, primäre, sekundäre oder tertiäre Amino-Reste oder Nitro-Reste substituiert sein können,
und die Reste $R_{13}$ bis $R_{16}$ unabhängig voneinander Wasserstoffatome, Cyano-, Alkyl($C_1$-$C_8$)-, Cyclopentyl-, Cyclohexyl-, Phenyl-, Naphthyl-, Pyridyl-, Benzyl- Tolyl-Methoxyphenyl-, Carboxyl-, Sulfonsäure-, Carboxamid-, Sulfonamid-, oder Lactam-Reste bedeuten, wobei die genannten Reste durch Chlor- oder Bromatome, Hydroxyl-, Cyano-, Mercapto-Reste, primäre, sekundäre oder tertiäre Amino-Reste oder Nitro-Reste substituiert sein können, und $X^-$ und $Y^-$ unabhängig voneinander ein $F^-$-, $Cl^-$-, $Br^-$-, $J^-$-, $BF_4^-$-, $B(Aryl)_4^-$-, $PF_6^-$- oder $P(Mo_3O_{10})_4^{3-}$-Anion darstellen, wobei diese Anionen auch in gemischter Form vorliegen können.

**8.** Verwendung von polymeren Ammoniumsalzen nach mindestens einem der Ansprüche 1 bis 7, dadurch gekennzeichnet, daß im Falle der Copolymerisation von Gemischen zweier Monomerer der in Anspruch 1 genannten Formeln (I) bis (III) die molaren Monomerenverhältnisse von (I):(II) und (I):(III) und (II):(III) im Copolymeren von etwa 0,5:0,5 bis etwa 0,95:0,05 betragen.

**9.** Verwendung von polymeren Ammoniumsalzen nach mindestens einem der Ansprüche 1 bis 8, dadurch gekennzeichnet, daß diese ein Molekulargewicht von etwa 20000 bis etwa 250000 besitzen.

**10.** Verwendung von polymeren Ammoniumsalzen nach mindestens einem der Ansprüche 1 bis 9, dadurch gekennzeichnet, daß man diese einzeln oder in Kombination in einer Konzentration von etwa 0,01 bis etwa 30 Gewichtsprozent einsetzt.

11. Verwendung von polymeren Ammoniumsalzen nach mindestens einem der Ansprüche 1 bis 10, dadurch gekennzeichnet, daß diese als Beschichtung von Carriern oder Bestandteil von Beschichtungen von Carriern, die in Entwicklern zum elektrophotographischen Kopieren oder Vervielfältigen von Vorlagen sowie zum Drucken von elektronisch, optisch oder magnetisch gespeicherten Informationen oder im Colorproofing zur Anwendung kommen, eingesetzt werden.

12. Verwendung von polymeren Ammoniumsalzen nach mindestens einem der Ansprüche 1 bis 10, dadurch gekennzeichnet, daß diese einzeln oder in Kombination als ladungsverbessernde Mittel in Pulvern und Lacken zur Oberflächenbeschichtung von Gegenständen aus Metall, Holz, Kunststoff, Glas, Keramik, Beton, Textilmaterial, Papier oder Kautschuk, insbesondere in triboelektrisch bzw. elektrokinetisch versprühten Pulverlacken, eingesetzt werden.

**Claims**

1. The use of a polymeric ammonium salt which has a molecular weight of about 5000 to about 500,000 and is obtained by homopolymerization of monomers of the formulae (I) or (II) or by copolymerization of mixtures of two monomers of the formulae (I) to (III) having a molar monomer ratio of (I):(II) and (I):(III) and (II):(III) of about 0.5: 0.5 to about 0.95:0.05 in the copolymer, if appropriate with subsequent anion exchange

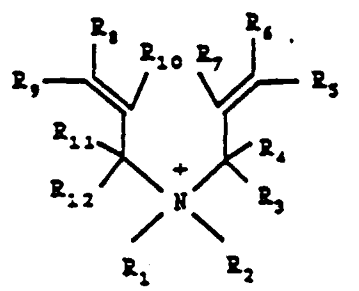

$X^-$ (I),

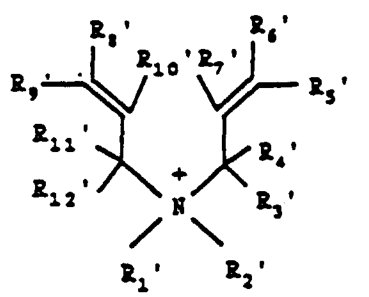

$Y^-$ (II),

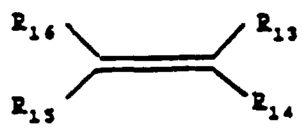

(III),

in which the radicals $R_1$ to $R_{12}$ and $R_1'$ to $R_{12}'$ independently of one another are each a hydrogen atom, a halogen atom, a hydroxyl radical, a primary, secondary or tertiary amino radical, a carboxylic acid or carboxylic acid ester radical, a sulfonic acid or sulfonic acid ester radical or a cyano or nitro radical, or are each a radical based on a hydrocarbon, which can be interrupted by hetero atoms, and $X^-$ and $Y^-$ are in each case the stoichiometric equivalent of an organic or inorganic anion or of a mixture of organic and/or inorganic anions, and the radicals $R_{13}$ to $R_{16}$

independently of one another are each a hydrogen atom, a chlorine atom, a bromine atom, a hydroxyl radical, a primary, secondary or tertiary amino radical, a carboxylic acid radical, a sulfonic acid or sulfonic acid ester radical or a cyano or nitro radical, or are in each case a radical based on a hydrocarbon, which can be interrupted by hetero atoms, by itself or in combination with others as a charge control agent in electrophotographic toners and developers which are employed for copying or duplicating masters and for printing electronically, magnetically or optically stored information or in colorproofing; and as a charge control agent in powders and powder coatings, it additionally being possible for $R_{13}$ to $R_{16}$ to have the meaning of a carboxylic ester radical.

**2.** The use of a polymeric ammonium salt as claimed in claim 1, wherein $R_1$ and $R_2$ or $R_1$' and $R_2$' independently of one another are hydrogen atoms, straight-chain or branched, saturated or unsaturated alkyl($C_1$-$C_{18}$) or alkoxy-($C_1$-$C_{18}$) radicals, polyoxyalkylene radicals of the formula -(alkylene($C_1$-$C_5$)-O)$_n$-R, in which R is a hydrogen atom, an alkyl($C_1$-$C_4$) radical or an acyl radical and n is a number from 1 to 10, aryl or heteroaryl radicals or aralkyl, aralkoxy, alkaryl or cycloalkyl radicals, and $R_1$ and $R_2$ or $R_1$' and $R_2$' can also combine to form a saturated or unsaturated, aromatic or non-aromatic 5- to 7-membered ring system, which can contain further hetero atoms and can be substituted and/or modified by fusion with or bridging to other ring systems, in which the radicals $R_1$ and $R_2$ or $R_1$' and $R_2$' can contain one or more hetero atoms and can be substituted by halogen atoms, hydroxyl, carboxyl, sulfonic acid, cyano, mercapto, carboxamide, sulfonamide, urethane or keto radicals, primary, secondary or tertiary amino radicals or nitro, ether, alkyl($C_1$-$C_{30}$), alkoxy-($C_1$-$C_{30}$), aroxy, halogenoalkyl ($C_1$-$C_{30}$), halogeno-alkoxy($C_1$-$C_{30}$) or ester radicals.

**3.** The use of a polymeric ammonium salt as claimed in at least one of claims 1 or 2, wherein the radicals $R_3$ to $R_{12}$ or $R_3$' to $R_{12}$' independently of one another are hydrogen atoms, halogen atoms, straight-chain or branched, saturated or unsaturated alkyl($C_1$-$C_{18}$) or alkoxy($C_1$-$C_{18}$) radicals, polyoxyalkylene radicals of the formula -(alkylene ($C_1$-$C_5$)-O)$_n$-R, in which R is a hydrogen atom, an alkyl($C_1$-$C_4$) radical or an acyl radical and n is a number from 1 to 10, aryl or heteroaryl radicals or aralkyl, aralkoxy, aroxy, alkaryl or cycloalkyl radicals, and two of the radicals $R_3$ to $R_{12}$ or $R_3$' to $R_{12}$' can also combine to form a saturated or unsaturated, aromatic or non-aromatic 5- to 7-membered ring system, which can contain further hetero atoms and can be substituted and/or modified by fusion with or bridging to other ring systems, in which the radicals $R_3$ to $R_{12}$ or $R_3$' to $R_{12}$' can contain one or more hetero atoms and can be substituted by halogen atoms, hydroxyl, carboxyl, sulfonic acid, cyano, mercapto, carboxamide, sulfonamide, urethane or keto radicals, primary, secondary or tertiary amino radicals or nitro, ether, alkyl-($C_1$-$C_{30}$), alkoxy($C_1$-$C_{30}$), aroxy, halogenoalkyl-($C_1$-$C_{30}$), halogenoalkoxy($C_1$-$C_{30}$) or ester radicals.

**4.** The use of a polymeric ammonium salt as claimed in at least one of claims 1 to 3, wherein the radicals $R_{13}$ to $R_{16}$ independently of one another are hydrogen atoms, chlorine atoms, bromine atoms, straight-chain or branched, saturated or unsaturated alkyl($C_1$-$C_{30}$) radicals, polyoxyalkylene radicals of the formula -(alkylene($C_1$-$C_5$)-O)$_n$-R, in which R is a hydrogen atom, an alkyl($C_1$-$C_4$) radical or an acyl radical and n is a number from 1 to 10, aryl or heteroaryl radicals, aralkyl, aralkoxy, alkaryl or cycloalkyl radicals or carboxyl, sulfonic acid, cyano, carboxamide, sulfonamide, carboxylate, keto, lactam or ether radicals, in which the radicals $R_{13}$ to $R_{16}$ can contain one or more hetero atoms and can be substituted by chlorine or bromine atoms, hydroxyl, carboxyl, sulfonic acid, cyano, mercapto, carboxamide or sulfonamide radicals, primary, secondary or tertiary amino radicals or nitro radicals.

**5.** The use of a polymeric ammonium salt as claimed in at least one of claims 1 to 4, wherein, in the case of homopolymerization of monomers of the formulae <u>(I)</u> or <u>(II)</u>, $R_1$ and $R_2$ and/or $R_1$' and $R_2$' can be identical or different, and, in the case of copolymerization of mixtures of two monomers of the formulae <u>(I)</u> to <u>(III)</u>, both the radicals $R_1$ and $R_1$' and/or $R_2$ and $R_2$' and the anions $X^-$ and $Y^-$ can be identical or different.

**6.** The use of a polymeric ammonium salt as claimed in at least one of claims 1 to 5, wherein, in the formulae <u>(I)</u> and <u>(II)</u> given in claim 1, $X^-$ and $Y^-$ independently of one another are a halide, nitrate, hydroxide, hydrogen sulfate, sulfate, sulfide, sulfite, thiosulfate, bicarbonate, carbonate, dihydrogen phosphate, hydrogen phosphate, phosphate, cyanide, cyanate, isocyanate, thiocyanate, zinc tetracyanate, zinc tetrathiocyanate, perchlorate, $BF_4^-$, $PF_6^-$, $B(aryl)_4^-$, $CH_3OSO_3^-$, $C_2H_5OSO_3^-$, phenolate or nitrophenolate anion, a saturated or unsaturated, aliphatic, cycloaliphatic or aromatic carboxylate or sulfonate anion, a perfluorinated saturated or unsaturated, aliphatic, cycloaliphatic or aromatic carboxylate or sulfonate anion, a saturated or unsaturated, aliphatic, cycloaliphatic or aromatic di- or tricarboxylic acid anion or di- or tri-sulfonic acid anion or a tungstate, molybdate or heteropolyacid anion, it also being possible for these anions to be present in the form of a mixture.

**7.** The use of a polymeric ammonium salt as claimed in at least one of claims 1 to 6, wherein, in the formulae <u>(I)</u> to <u>(III)</u> given in claim 1, the radicals $R_1$ and $R_2$ or $R_1$' and $R_2$' independently of one another are hydrogen atoms or

alkyl($C_1$-$C_8$), cyclopentyl, cyclohexyl, phenyl, naphthyl, pyridyl, benzyl, tolyl or methoxyphenyl radicals, in which the radicals mentioned can be substituted by halogen atoms, hydroxyl, cyano or mercapto radicals, primary, secondary or tertiary amino radicals or nitro radicals,

and the radicals $R_3$ to $R_{12}$ or $R_3$' to $R_{12}$' independently of one another are hydrogen atoms, halogen atoms or alkyl ($C_1$-$C_8$), cyclopentyl, cyclohexyl, phenyl, naphthyl, pyridyl, benzyl, tolyl or methoxyphenyl radicals, in which the radicals mentioned can be substituted by halogen atoms, hydroxyl, cyano or mercapto radicals, primary, secondary or tertiary amino radicals or nitro radicals,

and the radicals $R_{13}$ to $R_{16}$ independently of one another are hydrogen atoms or cyano, alkyl($C_1$-$C_8$), cyclopentyl, cyclohexyl, phenyl, naphthyl, pyridyl, benzyl, tolyl, methoxyphenyl, carboxyl, sulfonic acid, carboxamide, sulfonamide or lactam radicals, in which the radicals mentioned can be substituted by chlorine or bromine atoms, hydroxyl, cyano or mercapto radicals, primary, secondary or tertiary amino radicals or nitro radicals, and $X^-$ and $Y^-$ independently of one another are an $F^-$, $Cl^-$, $Br^-$, $I^-$, $BF_4^-$, $B(aryl)_4^-$, $PF_6^-$ or $P(Mo_3O_{10})_4^{3-}$ anion, it also being possible for these anions to be present in the form of a mixture.

8. The use of a polymeric ammonium salt as claimed in at least one of claims 1 to 7, wherein, in the case of copolymerization of mixtures of two monomers of the formulae (I) to (III) given in claim 1, the molar monomer ratios of (I):(II) and (I):(III) and (II):(III) in the copolymer are from about 0.5:0.5 to about 0.95:0.05.

9. The use of a polymeric ammonium salt as claimed in at least one of claims 1 to 8, which has a molecular weight of about 20,000 to about 250,000.

10. The use of a polymeric ammonium salt as claimed in at least one of claims 1 to 9, which is used by itself or in combination with others in a concentration of about 0.01 to about 30 percent by weight.

11. The use of a polymeric ammonium salt as claimed in at least one of claims 1 to 10, wherein this is employed as a coating of carriers or a constituent of coatings of carriers which are used in developers for electrophotographic copying or duplication of masters and for printing electronically, optically or magnetically stored information or in colorproofing.

12. The use of a polymeric ammonium salt as claimed in at least one of claims 1 to 10, wherein this is employed by itself or as a combination with others as a charge-improving agent in powders and varnishes for surface coating of objects made of metal, wood, plastic, glass, ceramic, concrete, textile material, paper or rubber, in particular in triboelectrically or electrokinetically sprayed powder coatings.

**Revendications**

1. Utilisation de sels d'ammonium polymères ayant un poids moléculaire d'environ 5.000 à environ 500.000 obtenus par homopolymérisation des monomères de formule générale (I) ou (II), ainsi que par copolymérisation des mélanges de deux monomères de formules générales (I) à (III) ayant un rapport de monomères en moles (I):(II) et (I):(III) et (II):(III) d'environ 0,5:0,5 à environ 0,95:0,05 dans les copolymères, éventuellement par échange anionique

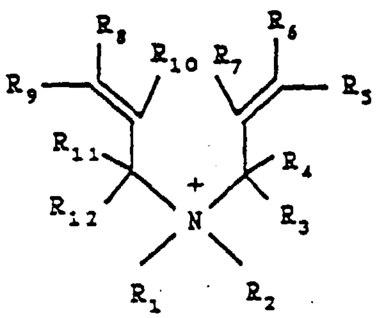

$X^-$ (I),

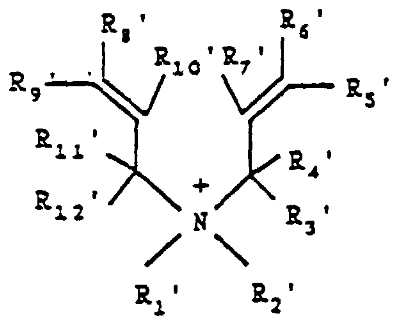

$Y^-$ (II),

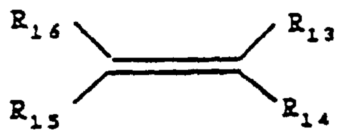

(III),

les radicaux $R_1$ à $R_{12}$ et $R_1'$ à $R_{12}'$, indépendamment les uns des autres, représentent chacun un atome d'hydrogène, un atome d'halogène, un radical hydroxyle, un radical amino primaire, secondaire ou tertiaire, un radical d'acide carboxylique ou un radical d'ester d'acide carboxylique, un radical d'acide sulfonique ou un radical d'ester d'acide sulfonique, un radical cyano ou nitro, ou chacun un radical à base d'un hydrocarbure qui peut être interrompu par des hétéroatomes, et $X^-$, respectivement $Y^-$, chacun étant l'équivalent stoechiométrique d'un anion organique ou inorganique ou d'un mélange d'anions organiques et/ou inorganiques, et les radicaux $R_{13}$ à $R_{16}$, indépendamment les uns des autres, étant chacun un atome d'hydrogène, un atome de chlore, un atome de brome, un radical hydroxyle, un radical amino primaire, secondaire ou tertiaire, un radical d'acide carboxylique, un radical d'acide sulfonique ou un radical ester d'acide sulfonique, un radical cyano ou nitro, ou chacun étant un radical à base d'un hydrocarbure qui peut être interrompu par des hétéroatomes, seul ou en combinaison, comme agent de contrôle de charge dans les révélateurs et les toners électrophotographiques, que l'on utilise pour copier ou multiplier des modèles ainsi que pour imprimer les informations stockées sur des supports électroniques, magnétiques ou optiques, ou dans le colorproofing ; ainsi que comme agent de contrôle de charge dans des poudres et des vernis en poudre, les radicaux $R_{13}$ à $R_{16}$ pouvant être de plus un radical d'ester d'acide carboxylique.

**2.** Utilisation de sels d'ammonium polymères selon la revendication 1, caractérisés en ce que $R_1$ et $R_2$, respectivement $R_1'$ et $R_2'$, indépendamment les uns des autres, représentent des atomes d'hydrogène, des radicaux alkyle en $C_1$-$C_{18}$, alcoxy en $C_1$-$C_{18}$ linéaires ou ramifiés, saturés ou insaturés, des radicaux de polyoxyalkylène de formule générale -(alkylène en $C_1$-$C_5$)-O)$_n$-R, dans laquelle R représente un atome d'hydrogène, un radical alkyle en $C_1$-$C_4$, ou un radical acyle, et n est un nombre de 1 à 10, des radicaux aryle ou hétéroaryle, des radicaux aralkyle, aralcoxy, alcaryle ou cycloalkyle et les radicaux $R_1$ et $R_2$, respectivement $R_1'$ et $R_2'$ peuvent se fermer en formant un système cyclique à 5 à 7 chaînons saturé ou insaturé, aromatique ou non aromatique, qui peut contenir d'autres hétéroatomes, ainsi qu'être substitué et/ou modifié par condensation sur ou par pontage à d'autres systèmes cycliques, les radicaux $R_1$ et $R_2$, respectivement $R_1'$ et $R_2'$, pouvant contenir un ou plusieurs hétéroatomes, et pouvant être substitués par des atomes d'halogène, des radicaux hydroxyle, carboxyle, acide sulfonique, cyano, mercapto, carboxamido, sulfonamido, uréthanne, céto, des radicaux amino primaires, secondaires ou tertiaires, des radicaux nitro, des radicaux éther, des radicaux alkyle en $C_1$-$C_{30}$, des radicaux alcoxy en $C_1$-$C_{30}$, des radicaux aroxy, des radicaux halogénoalkyle en $C_1$-$C_{30}$, des radicaux halogénoalcoxy en $C_1$-$C_{30}$ ou des radicaux ester.

**3.** Utilisation des sels d'ammonium polymères selon au moins l'une des revendications 1 ou 2, caractérisés en ce que les radicaux $R_3$ à $R_{12}$, respectivement $R_3'$ à $R_{12}'$, indépendamment les uns des autres, représentent des atomes d'hydrogène, des atomes d'halogène, des radicaux alkyle en $C_1$-$C_{18}$, des radicaux alcoxy en $C_1$-$C_{18}$ linéaires ou ramifiés, saturés ou insaturés, des radicaux polyoxyalkylène de formule générale -(alkylène en $C_1$-$C_5$)-O)$_n$-R, dans laquelle R représente un atome d'hydrogène, un radical alkyle en $C_1$-$C_4$ ou un radical acyle et n un nombre de 1 à 10, des radicaux aryle ou hétéroaryle, des radicaux aralkyle, des radicaux aralcoxy, des radicaux aroxy, des radicaux alcaryle ou des radicaux cycloalkyle, et deux radicaux $R_3$ à $R_{12}$, respectivement de $R_3'$ à $R_{12}'$ pouvant se refermer aussi en formant un système cyclique à 5 à 7 chaînons saturé ou insaturé, aromatique ou

non aromatique, qui peut contenir d'autres hétéroatomes, ainsi qu'être substitué et/ou modifié par condensation sur ou par pontage à d'autres systèmes cycliques, les radicaux $R_3$ à $R_{12}$, respectivement $R_3'$ à $R_{12}'$, pouvant contenir un ou plusieurs hétéroatomes et pouvant être substitués par des atomes d'halogène, des radicaux hydroxyle, carboxyle, acide sulfonique, cyano, mercapto, carboxamido, sulfonamido, uréthanne, céto, des radicaux amino primaires, secondaires ou tertiaires, des radicaux nitro, des radicaux éther, des radicaux alkyle en $C_1$-$C_{30}$, des radicaux alcoxy en $C_1$-$C_{30}$, des radicaux aroxy des radicaux halogénoalkyle en $C_1$-$C_{30}$, des radicaux halogénoalcoxy en $C_1$-$C_{30}$ ou des radicaux ester.

**4.** Utilisation des sels d'ammonium polymères selon au moins l'une des revendications 1 à 3, caractérisés en ce que les radicaux $R_{13}$ à $R_{16}$, indépendamment les uns des autres, représentent des atomes d'hydrogène, des atomes de chlore, des atomes de brome, des radicaux alkyle en $C_1$-$C_{30}$ linéaires ou ramifiés, saturés ou insaturés, des radicaux polyoxyalkylène de formule générale -(alkylène en $C_1$-$C_5$)-O)$_n$-R, dans laquelle R représente un atome d'hydrogène, un radical alkyle en $C_1$-$C_4$ ou un radical acyle, et n est un nombre de 1 à 10, des radicaux aryle ou hétéroaryle, des radicaux aralkyle, des radicaux aralcoxy, des radicaux alcaryle ou des radicaux cycloalkyle, des radicaux carboxyle, acide sulfonique, cyano, des radicaux carboxamido, des radicaux sulfonamido, des radicaux carboxylate, des radicaux céto, des radicaux lactame ou des radicaux éthers, les radicaux $R_{13}$ à $R_{16}$ pouvant contenir un ou plusieurs hétéroatomes et pouvant être substitués par des atomes de chlore ou de brome, des radicaux hydroxyle, carboxyle, acide sulfonique, cyano, mercapto, carboxamido, sulfonamido, des radicaux amino primaires, secondaires ou tertiaires, ou des radicaux nitro.

**5.** Utilisation des sels d'ammonium polymères selon au moins l'une des revendications 1 à 4, caractérisés en ce que dans le cas d'homopolymérisation de monomères de formules générales (I) ou (II), $R_1$ et $R_2$ et/ou $R_1'$ à $R_2'$ peuvent être identiques ou différents, et dans le cas de copolymérisation des mélanges de deux monomères de formules (I) à (III), aussi bien les radicaux $R_1$ et $R_2$ et/ou $R_1'$ à $R_2'$ que des anions $X^-$ et $Y^-$ peuvent être identiques ou différents.

**6.** Utilisation des sels d'ammonium polymères selon au moins l'une des revendications 1 à 5, caractérisés en ce que $X^-$ et $Y^-$ dans les formules (I) et (II) citées dans la revendication 1, indépendamment l'un de l'autre, représentent un anion halogéne, nitrate, hydroxyde, halogénosulfate, sulfate, sulfure, sulfite, thiosulfate, bicarbonate, carbonate, dihydrogénophosphate, hydrogénophosphate, phosphate, cyanure, cyanate, isocyanate, thiocyanate, tétracyanate de zinc, tétrathiocyanate de zinc, perchlorate, $BF_4^-$-, $PF_6^-$-, B(aryle)$_4^-$, $CH_3OSO_3^-$-, $C_2H_5OSO_3^-$-, phénolate, nitrophénolate, un anion carboxylate ou sulfonate, saturé ou insaturé, aliphatique, cycloaliphatique ou aromatique, un anion sulfonate ou carboxylate perfluoré, saturé ou insaturé, aliphatique, cycloaliphatique ou aromatique, un anion acide di- et tricarboxylique saturé ou insaturé, cycloaliphatique, aliphatique ou aromatique, un anion tungsténate, molybdate ou hétéropolyacide, ces anions pouvant être présents également sous forme mixte.

**7.** Utilisation des sels d'ammonium polymères selon au moins l'une des revendications 1 à 6, caractérisés en ce que les radicaux $R_1$ et $R_2$, respectivement $R_1'$ et $R_2'$, dans les formules (I) à (III) citées dans la revendication 1, indépendamment les uns des autres, représentent des atomes d'hydrogène, des radicaux alkyle en $C_1$-$C_8$, cyclopentyle, cyclohexyle, phényle, naphtyle, pyridyle, benzyle, tolyle ou méthoxyphényle, les radicaux cités pouvant être substitués par des atomes d'halogène, des radicaux hydroxyle, cyano, mercapto, des radicaux amino primaires, secondaires ou tertiaires, ou des radicaux nitro,
et les radicaux $R_3$ à $R_{12}$, respectivement $R_3'$ à $R_{12}'$, indépendamment les uns des autres, représentent des atomes d'hydrogène, des atomes d'halogènes, des radicaux alkyle en $C_1$-$C_8$, cyclopentyle, cyclohexyle, phényle, naphtyle, pyridyle, benzyle, tolyle ou méthoxyphényle, les radicaux cités pouvant également être substitués par des atomes d'halogènes, des radicaux hydroxyle, cyano, mercapto, des radicaux amino primaires, secondaires ou tertiaires, ou des radicaux nitro,
et les radicaux $R_{13}$ à $R_{16}$, indépendamment les uns des autres, étant des atomes d'hydrogène, des radicaux cyano, alkyle en $C_1$-$C_8$, cyclopentyle, cyclohexyle, phényle, naphtyle, pyridyle, benzyle, tolyle, méthoxyphényle, carboxyle, acide sulfonique, carboxamido, sulfonamido ou lactame, les radicaux cités pouvant également être substitués par des atomes de chlore ou de brome, des radicaux hydroxyle, cyano, mercapto, des radicaux amino primaires, secondaires ou tertiaires, ou des radicaux nitro, et $X^-$ et $Y^-$, indépendamment l'un de l'autre, représentent un anion $F^-$-, $Cl^-$-, $Br^-$-, $J^-$-, $BF_4^-$-, B(aryl)$_4$-, $PF_6^-$- ou $P(Mo_3O_{10})_4^{3-}$-, ces anions pouvant être présents également sous forme mixte.

**8.** Utilisation des sels d'ammonium polymères selon au moins l'une des revendications 1 à 7, caractérisée en ce que dans le cas de la copolymérisation des mélanges de deux monomères de formules (I) à (III) cités dans la revendication 1, les rapports de monomères en moles de (I):(II) et (I):(III) et (II):(III) dans le copolymère sont d'environ 0,5:0,5 à environ 0,95:0,05.

**9.** Utilisation des sels d'ammonium polymères selon au moins l'une des revendications 1 à 8, caractérisée en ce qu'ils ont un poids moléculaire d'environ 20.000 à environ 250.000.

**10.** Utilisation des sels d'ammonium polymères selon au moins l'une des revendications 1 à 9, caractérisée en ce qu'on les utilise seuls ou en combinaison dans une concentration d'environ 0,01 à environ 30 % en poids.

**11.** Utilisation des sels d'ammonium polymères selon au moins l'une des revendications 1 à 10, caractérisée en ce qu'on les utilise comme revêtement de véhicules ou comme constituants de revêtements de véhicules que l'on utilise dans les révélateurs pour copier et multiplier par électrophotographie des modèles ainsi que pour l'impression des informations stockées sur des supports électroniques, optiques ou magnétiques ou dans le colorproofing.

**12.** Utilisation des sels d'ammonium polymères selon au moins l'une des revendications 1 à 10, caractérisée en ce qu'on les utilise seuls ou en combinaison comme agents d'amélioration de chargement dans les vernis et les poudres pour le revêtement de surface d'objets métalliques, de bois, de matières plastiques, de verre, de céramique, de béton, de matières textiles, de papiers ou de caoutchoucs, plus particulièrement les vernis en poudre pulvérisés triboélectriquement, respectivement par voie électrocinétique.